# EUROPÄISCHE PATENTSCHRIFT

(11) **EP 3 487 861 B1**
(45) Veröffentlichungstag und Bekanntmachung des Hinweises auf die Patenterteilung: **01.12.2021**
(21) Anmeldenummer: 17740721.0
(22) Anmeldetag: 12.07.2017
(51) Int. Cl.: C07F 9/30, C09K 21/12

(54) **DIORGANYLPHOSPHINSÄURESALZE, EIN VERFAHREN ZU DEREN HERSTELLUNG UND IHRE VERWENDUNG**
DIORGANYLPHOSPHINIC ACID SALTS, METHOD FOR THE PRODUCTION THEREOF AND THE USE THEREOF
SELS D'ACIDE DIORGANYLPHOSPHINIQUE, LEUR PROCÉDÉ DE FABRICATION ET LEUR UTILISATION

(30) Priorität: 20.07.2016 DE 102016213280
(43) Veröffentlichungstag der Anmeldung: 29.05.2019
(73) Patentinhaber: Clariant International Ltd, 4132 Muttenz (CH)
(72) Erfinder: BAUER, Harald, 50170 Kerpen (DE); HÖROLD, Sebastian, 86420 Diedorf (DE); SICKEN, Martin, 51149 Köln (DE)
(74) Vertreter: Jacobi, Carola
(86) Internationale Anmeldenummer: PCT/EP2017/067609
(87) Internationale Veröffentlichungsnummer: WO 2018/015251

(56) Entgegenhaltungen:
- DE-A1- 10 359 815

## Beschreibung

Nach dem Stand der Technik werden Dialkylphosphinsäuresalze, auch Dialkylphosphinate genannt, in Flammschutzmittelmischungen als Mg-, Ca-, Al-, Sb-, Sn-, Ge-, Ti-, Fe-, Zr-, Zn-, Ce-, Bi-, Sr-, Mn-, Li-, Na- und/oder K-Salze eingesetzt.

Die Dialkylphosphinsäuresalze selbst und andere organische Salze der Phosphinsäure werden zusammengefast auch als Diorganylphosphinsäuresalze bezeichnet.

Diorganylphosphinsäuresalze werden beispielsweise in der DE 10359815 A1 beschrieben. Hierbei beschrieben ist ebenfalls ein Verfahren zur Herstellung von reinem Aluminiumdiethylphosphinat, welches später als Flammschutzmittel verwendet wird.

Die Flammschutzmittelmischungen nach dem Stand der Technik besitzen eine begrenzte thermische Beständigkeit. Dies wirkt sich in einem beschränkten Temperaturbereich aus, in dem die Ausgangsstoffe aus Polymer, Flammschutzmittel, Glasfasern und weitere Additive zu flammgeschützten Polymerformmassen compoundiert werden können. Man spricht von einem Verarbeitungsfenster, das von einer unteren und einer oberen Temperaturgrenze begrenzt ist.

Die untere Temperaturgrenze ergibt sich indem erst ab einer bestimmten Temperatur die Zähigkeit des Polymers niedrig genug ist, dass es in den Maschinen transportierbar und mischbar ist.

Die obere Temperatur äußert sich indirekt in einer Zersetzung der Rohstoffe und dem späteren Ausblühen von Zersetzungsprodukten wenn die flammgeschützten Polymerformmassen und Polymerformkörper unter feuchten Bedingungen gelagert werden. Zersetzt sich das Polymer können auch die mechanischen Festigkeitseigenschaften der flammgeschützten Polymerformkörper (E-Modul, Biegefestigkeit, Reißdehnung) verringert werden.

Der vorliegenden Erfindung liegt daher die Aufgabe zugrunde, eine thermisch beständigere Flammschutzmittelmischung mit einem weitreichendem Verarbeitungsfenster zur Verfügung zu stellen.

Die Aufgabe wird gelöst durch Diorganylphosphinsäuresalze, die Eisen enthalten.

Überraschenderweise wurde gefunden, dass die erfindungsgemäßen Diorganylphosphinsäuresalze ein verbreitertes Verarbeitungsfenster bei der Compoundierung von flammgeschützten Polymerformmassen bzw. beim Spritzgießen von flammgeschützten Polymerformkörpern aufweisen und gleichzeitig eine gute Flammschutzwirkung zeigen.

Die Erfindung betrifft daher Diorganylphosphinsäuresalze, enthaltend 0,0001 bis 99,9999 Gew.-% Eisen.

Bevorzugt entsprechen die Diorganylphosphinsäuresalze der Formel (I) 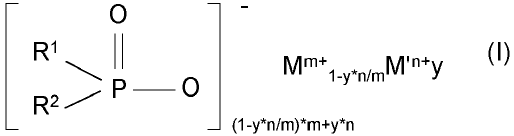 in der
- R¹ und R²: gleich oder verschieden sind und C₁-C₁₈-Alkyl linear, verzweigt oder cyclisch, C₆-C₁₈-Aryl, C₇-C₁₈-Arylalkyl und/oder C₇-C₁₈-Alkylaryl bedeuten oder miteinander mindestens einen Ring bilden,
- y: 0,00001 bis 0,091,
- m: 1 bis 4 und
- n: 2 bis 3,
- M: Mg, Ca, Al, Sb, Sn, Ge, Ti, Zr, Zn, Ce, Bi, Sr, Mn, Li, Na und/oder K und
- M': Fe bedeutet.

Bevorzugt sind in Formel (I) R¹, R² gleich oder verschieden und bedeuten, unabhängig voneinander, Methyl, Ethyl, n-Propyl, iso-Propyl, n-Butyl, tert.-Butyl, n-Pentyl, 2-Pentyl, 3-Pentyl, 2-Methylbutyl, 3-Methylbutyl (iso-Pentyl), 3-Methylbut-2-yl, 2-Methylbut-2-yl, 2,2-Dimethylpropyl (Neopentyl), Hexyl, Heptyl, Octyl, Nonyl, Decyl, Cyclopentyl, Cyclopentylethyl, Cyclohexyl, Cyclohexylethyl, Phenyl, Phenylethyl, Methylphenyl und/oder Methylphenylethyl.

Bevorzugt entsprechen die Diorganylphosphinsäuresalze der Formel (II) 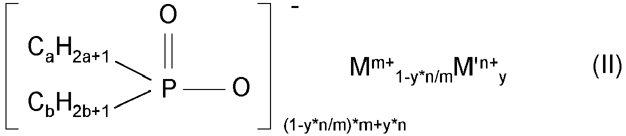 worin
- a und b: gleich oder verschieden sind und jeweils, unabhängig voneinander, 1 bis 9 bedeuten und die Gruppen CₐH₂ₐ₊₁ und C_{b}H_{2b+1} geradlinig oder verzweigt sein können und
- y: 0,00001 bis 0,091,
- m: 1 bis 4 und
- n: 2 bis 3,
- M: Mg, Ca, Al, Sb, Sn, Ge, Ti, Zr, Zn, Ce, Bi, Sr, Mn, Li, Na und/oder K und
- M': Fe bedeutet.

Bevorzugt liegt das Eisen als Eisen(II)dialkylphosphinate und/oder Eisen(III)dialkylphosphinate vor.

Bevorzugt liegen M und M' mit den Anionen (CₐH₂ₐ₊₁)(C_{b}H_{2b+1})PO₂ als eine einheitliche ionische Verbindung vor.

Bevorzugt enthalten die Diorganylphosphinsäuresalze weiterhin Telomer-Ionen, wobei es sich bei den Telomer-Ionen um solche der Summenformel (VI) handelt

H-(C_{w}H_{2w})ₖP(O)(O⁽⁻⁾)(CₓH₂ₓ)ₗ-H (VI)

wobei in Formel (VI), unabhängig voneinander,

| | | |
|---|---|---|
| k | 1 bis 9, l | 1 bis 9, |
| w | 2 bis 9, x | 2 bis 9, |

bedeuten.

Bevorzugt bedeuten in Formel (VI) w und x jeweils 2 bis 4 und k und l jeweils 1 bis 4.

Besonders bevorzugt bedeuten in Formel (VI) w und x jeweils 2 oder 3 und k und l jeweils 1 bis 3.

Bevorzugt enthalten die Diorganylphosphinsäuresalze nach einem oder mehreren der Ansprüche 1 bis 9
a) 60 bis 99,8999 P-% Dialkylphosphinsäuresalze der Formel (II) und
b) 0,1 bis 40 P-% Telomer-Ionen der Formel (VI),
wobei die Summe von a) und b) 100 P-% ergibt mit der Maßgabe, dass es sich bei den Diorganylphosphinsäuresalzen der Formel (II) und den Telomer-Ionen der Formel (VI) jeweils um unterschiedliche Verbindungen handelt.

Bevorzugt bilden die Diorganylphosphinsäuresalze und Telomerionen in Form ihrer Metallsalze einheitliche ionische Verbindungen, d. h. die Telomerionen sind in die Diorganylphosphinsäure-Telomer-Salze ionisch eingebaut.

Bevorzugt stellen die Ionen M, M', (CₐH₂ₐ₊₁)(C_{b}H_{2b+1})PO₂⁻, H-(C_{w}H_{2w})ₖPO₂⁻(CₓH₂ₓ)ₗ-H und die Anionen der Ethylbutylphosphinsäure, Dibutylphosphinsäure, Ethylhexylphosphinsäure, Butylhexylphosphinsäure, Ethyloctylphosphinsäure, sec-Butylethylphosphinsäure, 1-Ethylbutyl-Butyl-phosphinsäure, Ethyl-1-Methylpentyl-phosphinsäure, Di-sec-Butylphosphinsäure (Di-1-Methyl-propylphosphinsäure), Propyl-Hexylphosphinsäure, Dihexylphosphinsäure, Hexyl-Nonylphosphinsäure, Propyl-Nonylphosphinsäure, Dinonylphosphinsäure, Dipropylphosphinsäure, Butyl-Octylphosphinsäure, Hexyl-Octylphosphinsäure, Dioctylphosphinsäure, Ethyl(cyclopentylethyl)phosphinsäure, Butyl(cyclopentylethyl)phosphininsäure, Ethyl(cyclohexylethyl)phosphinsäure, Butyl(cyclohexylethyl)phosphinsäure, Ethyl(phenylethyl)phosphinsäure, Butyl(phenylethyl)phosphinsäure, Ethyl(4-methylphenylethyl)phosphinsäure, Butyl(4-methylphenylethyl)phosphinsäure, Butylcyclopentylphosphininsäure, Butylcyclohexylethylphosphinsäure, Butylphenylphosphinsäure, Ethyl(4-methylphenyl)phosphinsäure und/oder Butyl(4-methylphenyl)phosphinsäure miteinander eine einheitliche ionische Verbindung dar.

Bevorzugt liegen die Telomer-Ionen in Form ihrer Metallsalze vor, wobei es sich dabei um Metallsalze der Ethylbutylphosphinsäure, Dibutylphosphinsäure, Ethylhexylphosphinsäure, Butylhexylphosphinsäure, Ethyloctylphosphinsäure, sec-Butylethylphosphinsäure, 1-Ethylbutyl-Butyl-phosphinsäure, Ethyl-1-Methylpentyl-phosphinsäure, Di-sec-Butylphosphinsäure (Di-1-Methyl-propylphosphinsäure), Propyl-Hexylphosphinsäure, Dihexylphosphinsäure, Hexyl-Nonylphosphinsäure, Propyl-Nonylphosphinsäure, Dinonylphosphinsäure, Dipropylphosphinsäure, Butyl-Octylphosphinsäure, Hexyl-Octylphosphinsäure, Dioctylphosphinsäure, Ethyl(cyclopentylethyl)phosphinsäure, Butyl(cyclopentylethyl)phosphininsäure, Ethyl(cyclohexylethyl)phosphinsäure, Butyl(cyclohexylethyl)phosphinsäure, Ethyl(phenylethyl)phosphinsäure, Butyl(phenylethyl)phosphinsäure, Ethyl(4-methylphenylethyl)phosphinsäure, Butyl(4-methylphenylethyl)phosphinsäure, Butylcyclopentylphosphininsäure, Butylcyclohexylethylphosphinsäure, Butylphenylphosphinsäure, Ethyl(4-methylphenyl)phosphinsäure und/oder Butyl(4-methylphenyl)phosphinsäure handelt, und das Metall des Metallsalzes aus der Gruppe Mg, Ca, Al, Sb, Sn, Ge, Ti, Fe, Zr, Zn, Ce, Bi, Sr, Mn, Li, Na und/oder K entstammt.

Bevorzugt weisen die erfindungsgemäßen Diorganylphosphinsäuresalze
eine Teilchengröße von 0,1 bis 1000 µm,
eine Schüttdichte von 80 bis 800 g/l,
eine Stampfdichte bzw. Rütteldichte von 100 g/l bis 1100 g/l,
einen Schüttwinkel von 5 bis 45 Grad,
eine BET-Oberfläche von 1 bis 40 m²/g,
L-Farbwerte von 85 bis 99,9,
a-Farbwerte von -4 bis +9 und
b-Farbwerte von -2 bis +6 auf.

Besonders bevorzugt weisen die erfindungsgemäßen
Diorganylphosphinsäuresalze
eine Teilchengröße von 0,5 bis 800 µm,
eine Schüttdichte bzw. Rütteldichte von 80 bis 600 g/l,
eine Stampfdichte von 600 g/l bis 800 g/l und
einen Schüttwinkel von 10 bis 40 Grad auf.

Die Erfindung betrifft auch ein Verfahren zur Herstellung von Diorganylphosphinsäuresalzen nach einem oder mehreren der Ansprüche 1 bis 14, dadurch gekennzeichnet, dass man
a) in einer Prozessstufe 1 0,9 bis 1,1 Moleküle Olefin pro P an ein wasserlösliches Salz der hypophosphorigen Säure oder der Säure selbst addiert,
b) in einer Prozessstufe 2 0,9 bis 1,1 zusätzliche Moleküle Olefin pro P an das Zwischenprodukt aus a) zu Dialkylphosphinsäure oder deren Salz addiert
c) in einer Prozessstufe 3 ein bis 9 weitere Olefinmoleküle an 0 bis 20 % der Dialkylphosphinatmoleküle aus Prozessstufe 1 addiert, so dass sich Telomere bilden
d) in einer Prozessstufe 4 eine Kristallisation des Zwischenprodukts aus b) oder c) mit einem Metallsalz und einem Eisensalz durchführt.

Die Erfindung betrifft ein weiteres Verfahren zur Herstellung von Diorganylphosphinsäuresalzen nach einem oder mehreren der Ansprüche 1 bis 14, dadurch gekennzeichnet, dass man
a) in einer Prozessstufe 1 0,9 bis 1,1 Moleküle Olefin pro P an ein wasserlösliches Salz der hypophosphorigen Säure oder der Säure selbst addiert,
b) in einer Prozessstufe 2 0,9 bis 1,1 zusätzliche Moleküle Olefin pro P an das Zwischenprodukt aus a) zu Dialkylphosphinsäure oder deren Salz addiert
c) in einer Prozessstufe 3 ein bis 9 weitere Olefinmoleküle an 0 bis 20 % der Dialkylphosphinatmoleküle aus Prozessstufe 1 addiert, so dass sich Telomere bilden
d) in einer Prozessstufe 4 eine Kristallisation mit einem Metallsalz und/oder einem Eisensalz durchführt und
e) in einer Prozessstufe 5 eine Cofällung des Zwischenprodukts aus d) mit einem Metallsalz oder einem Eisensalz durchführt.

Bevorzugt bildet das Telomersalz Cofällungen mit Diorganylphosphinsäuresalzen, die bereits ionisches Eisen eingebaut haben.

Ein anders Verfahren zur Herstellung von Diorganylphosphinsäuresalzen nach einem oder mehreren der Ansprüche 1 bis 14, ist dadurch gekennzeichnet, dass man
a) in einer Prozessstufe 1 0,9 bis 1,1 Moleküle Olefin pro P an ein wasserlösliches Salz der hypophosphorigen Säure oder der Säure selbst addiert,
b) in einer Prozessstufe 2 0,9 bis 1,1 zusätzliche Moleküle Olefin pro P an das Zwischenprodukt aus a) zu Dialkylphosphinsäure oder deren Salz addiert
c) in einer Prozessstufe 3 eine Kristallisation mit einem Metallsalz und/oder einem Eisensalz durchführt und
d) danach in einer Prozessstufe 4 die Telomere physikalisch untermischt.

Bevorzugt werden die Telomersalze physikalisch mit Diorganylphosphinsäuresalzen gemischt, die bereits ionisches Eisen eingebaut haben.

Bevorzugt handelt es sich bei den Eisensalzen um Fluoride, Chloride, Bromide, lodide, Iodat, Perchlorat, Oxide, Hydroxide, Peroxide, Superoxide, Sulfate, Hydrogensulfate, Sulfathydrate, Sulfite, Peroxosulfate, Nitride, Phosphide, Nitrate, Nitrathydrate, Nitrite, Phosphate, Peroxophosphate, Phosphite, Hypophosphite, Pyrophosphate, Carbonate, Hydrogencarbonate, Hydroxidcarbonate, Carbonathydrate, Silicate, Hexafluorosilicate, Hexafluorosilicathydrate, Stannate, Borate, Polyborate, Peroxoborate, Thiocyanate, Cyanate, Cyanide, Chromate, Chromite, Molybdate, Permanganate, Formiate, Acetate, Acetathydrate, Trifluoracetathydrate, Propionate, Butyrate, Valerate, Caprylate, Oleate, Stearate, Oxalate, Tartrate, Citrate, basische Citrate, Citrathydrate, Benzoate, Salicylate, Lactate, Lactathydrate, Acrylate, Maleate, Salze der Bernsteinsäure, Salze des Glyzins, Phenolate, Para-Phenolsulfonate, Para-Phenolsulfonathydrate, Acetylacetonathydrate, Tannate, Dimethyldithiocarbamate, Trifluormethansulfonat, Alkylsulfonate und/oder Aralkylsulfonate.

Bevorzugt werden die erfindungsgemäßen Diorganylphosphinsäuresalze als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen verwendet.

Insbesondere werden die erfindungsgemäßen Diorganylphosphinsäuresalze als Flammschutzmittel, als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung verwendet.

Bevorzugt werden bei der vorgenannten Verwendung die Diorganylphosphinsäuresalze nach einem oder mehreren der Ansprüche 1 bis 14 zusammen mit Synergisten eingesetzt, wobei es sich bei den Synergisten um Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphate, Melampolyphosphate, Melempolyphosphate und/oder Melonpolyphosphate; um Melaminkondensationsprodukte wie Melam, Melem und/oder Melon; um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Harnstoffcyanurat, Dicyandiamid und/oder Guanidin; um stickstoffhaltige Phosphate der Formeln (NH₄)_{y}H_{3-y}PO₄ bzw. (NH₄PO₃)_{z}, mit y gleich 1 bis 3 und z gleich 1 bis 10.000; um Aluminiumphosphite, Aluminiumpyrophosphite, Aluminiumphosphonate, Aluminiumpyrophosphonate; um Silicate, Zeolite, Kieselsäuren, Keramikpulver, Zinkverbindungen, z. B. Zinkborat, Zinkcarbonat, Zinkstannat, Zinkhydroxystannat, Zinkphosphat, Zinksulfid, Zinkoxid, Zinkhydroxid, Zinnoxidhydrat, basisches Zink-Silikat, Zinkmolybdat Magnesiumhydroxid, Hydrotalcit, Magnesiumcarbonat, Calciummagnesiumcarbonat; um Salze der Ethylphosphonsäure, der Propylphosphonsäure, der Butylphosphonsäure, der n-butylphosphonsäure, der sec-Butylphosphonsäureat), der Hexylphosphonsäure und/oder der Octylphosphonsäure handelt.

Bevorzugt werden bei einer solchen Verwendung weitere Additive, wobei es sich dabei um Antioxidantien, UV-Stabilisatoren, Gammastrahlenstabilisatoren, Hydrolysestabilisatoren, , Antistatika, Emulgatoren, Nukleierungsmittel, Weichmacher, Verarbeitungshilfsmittel, Schlagzähmodifikatoren, Farbstoffe, Pigmente und andere handelt, eingesetzt.

Insbesondere werden bei den vorgenannten Verwendungen
0,0001 bis 99,7999 Gew.-% Diorganylphosphinsäuresalze nach einem oder mehreren der Ansprüche 1 bis 14,
0,1 bis 40 Gew.-% Synergisten und
0,1 bis 40 Gew.-% Additive eingesetzt, wobei die Summe der Komponenten 100 Gew.-% beträgt.

Die Erfindung betrifft schließlich auch eine flammgeschützte thermoplastische oder duroplastische Polymerformmasse, Polymer-Formkörper, -Filme, -Fäden und/oder Fasern, enthaltend 0,5 bis 45 Gew.-% Diorganylphosphinsäuresalze nach einem oder mehreren der Ansprüche 1 bis 14, 0,5 bis 95 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt und es sich bei dem Polymer um thermoplastische Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe und/oder um duroplastische Polymere der Art ungesättigter Polyester oder Epoxidharze handelt.

Wie eingangs bereits ausgeführt, liegen die erfindungsgemäßen Diorganylphosphinsäuresalze am Häufigsten als Dialkylphosphinsäuresalze vor.

Gemäß der vorliegenden Erfindung kann das Eisen bevorzugt ionisch eingebaut in einem Dialkylphosphinsäuresalz oder einem Dialkylphosphinsäure-Telomersalz vorliegen. Da Aluminiumdialkylphosphinat und Eisen(II)dialkylphosphinat kristallchemisch isostrukturell sind, werden Eisen(III)-Ionen in das Aluminiumdialkylphosphinat-Kristallgitter eingebaut. Dies zeigt sich an der gleichmäßig sich verändernden c-Achse der kristallchemischen Elementarzelle. Es liegen dann keine physikalischen Mischungen vor.

Dies gilt vor allem für Aluminiumdiethylphosphinat und das entsprechende Eisen(III)diethylphosphinat.

**Tabelle 1: Kristallographische Folgen des Eiseneinbaus in Aluminiumtri(diethylphosphinat)**

| Eisendiethylphosphinatgehalt | Länge der c-Achse der kristallographischen Elementarzelle |
|---|---|
| [mol/(mol Eisendiethylphosphinat + mol Aluminiumdiethylphosphinat)] | [Angström] |
| 0,00 | 9,068 |
| 0,16 | 9,092 |
| 0,31 | 9,125 |

Für die Stabilität des Dialkylphosphinsäuresalzes bzw. des Dialkylphosphinsäure-Telomersalzes gegen Entmischung beim Rütteln ist der Einbau des Eisens in das Kristallgitter des anderen Metalles, hier Aluminium, vorteilhaft.

Die vorgenannte Aussage gilt analog auch für Diorganylphosphinsäuresalze, die andere als Alkylgruppen enthalten oder andere als Alkylgruppen und Alkylgruppen enthalten.

Bevorzugt handelt es sich bei den Eisensalzen für den ionischen Einbau um lösliche Verbindungen.

Bevorzugt handelt es sich bei den Eisensalzen für den ionischen Einbau um Eisen (II) und/oder Eisen(III)salze.

Bevorzugt handelt es sich bei den Eisensalzen für den ionischen Einbau und die Cofällung um Eisen (II) und/oder Eisen(III)salze mit anorganischen Anionen der siebten Hauptgruppe (Halogenide) wie z. B. Fluoride, Chloride, Bromide, lodide; mit Anionen der Oxosäuren der siebten Hauptgruppe (Hypohalogenite, Halogenite, Halogenate, z. B. Iodat, Perhalogenate, z. B. Perchlorat); mit Anionen der sechsten Hauptgruppe (Chalgogenide) wie z. B. Oxide, Hydroxide, Peroxide, Superoxide; mit Anionen der Oxosäuren der sechsten Hauptgruppe (Sulfate, Hydrogensulfate, Sulfathydrate, Sulfite, Peroxosulfate); mit Anionen der fünften Hauptgruppe (Pnicogenide) wie z. B. Nitride, Phosphide; mit Anionen der Oxosäuren der fünften Hauptgruppe (Nitrat, Nitrathydrate, Nitrite, Phosphate, Peroxophosphate, Phosphite, Hypophosphite, Pyrophosphate); mit Anionen der Oxosäuren der vierten Hauptgruppe (Carbonate, Hydrogencarbonate, Hydroxidcarbonate, Carbonathydrate, Silicate, Hexafluorosilicate, Hexafluorosilicathydrate, Stannate); mit Anionen der Oxosäuren der dritten Hauptgruppe (Borate, Polyborate, Peroxoborate); mit Anionen der Pseudohalogenide (Thiocyanate, Cyanate, Cyanide); mit Anionen der Oxosäuren der Übergangsmetalle (Chromate, Chromite, Molybdate, Permanganat).

Bevorzugt handelt es sich bei den Eisensalzen für den ionischen Einbau und die Cofällung um Eisen (II) und/oder Eisen(III)salze mit organischen Anionen aus der Gruppe der Mono-, Di-, Oligo-, Polycarbonsäuren (Salze der Ameisensäure (Formiate), der Essigsäure (Acetate, Acetathydrate), der Trifluoressigsäure (Trifluoracetathydrate), Propionate, Butyrate, Valerate, Caprylate, Oleate, Stearate, der Oxalsäure (Oxalate), der Weinsäure (Tartrate), Citronensäure (Citrate, basische Citrate, Citrathydrate), Benzoesäure (Benzoate), Salicylate, Milchsäure (Lactat, Lactathydrate), Acrylsäure, Maleinsäure, Bernsteinsäure, von Aminosäuren (Glyzin), von sauren Hydroxofunktionen (Phenolate etc), Para-Phenolsulfonate, Para-Phenolsulfonathydrate, Acetylacetonathydrate, Tannate, Dimethyldithiocarbamate, Trifluormethansulfonat, Alkylsulfonate, Aralkylsulfonate.

Bevorzugt handelt es sich bei den Eisensalzen für den ionischen Einbau um Eisen (II) und/oder Eisen(III)-borate, -sulfate, -sulfathydrate, -hydroxosulfathydrate, gemischte -hydroxosulfathydrate; -oxysulfate, -acetate, -nitrate, -fluorid, -fluoridhydrate, -chlorid, chloridhydrate, -oxychloride, -bromide, -iodide, -iodidhydrate und/oder -carbonsäurederivate.

Bevorzugte Eisensalze für die physikalische Mischung sind Eisen(II)dialkylphosphinate.

Bevorzugte Eisen(II)dialkylphosphinate sind Eisen (II)bis(diethylphosphinat), Eisen (II)bis(dipropylphosphinat), Eisen(II) bis(butylethylphosphinat, Eisen(II)bis(n-butylethylphosphinat, Eisen(II)bis(sec-butylethylphosphinat), Eisen(II) bis(hexylethylphosphinat), Eisen(II) bis(dibutylphosphinat), Eisen(II) bis(hexylbutylphosphinat) und / oder Eisen(II) bis(octylethylphosphinat).

Bevorzugte Eisensalze für die physikalische Mischung sind Eisen(III)dialkylphosphinate.

Bevorzugte Eisen(III)dialkylphosphinate sind Eisen(III)tris(diethylphosphinat), Eisen(III)tris(dipropylphosphinat), Eisen(III)tris(butylethylphosphinat, Eisen(III)tris(n-butylethylphosphinat, Eisen(III)tris(sec-butylethylphosphinat), Eisen(III)tris (hexylethylphosphinat), Eisen(III)tris (dibutylphosphinat), Eisen(III)tris (hexylbutylphosphinat) und / oder Eisen(III)tris (octylethylphosphinat).

Telomere entstehen bei der Anlagerung des Olefins an das Hypophosphition. Es werden nicht nur zwei Moleküle Olefin zum Dialkylphosphination angelagert, sondern mehrere. Eine oder beide Alkylketten werden so um eine oder mehrere weitere Olefineinheiten verlängert.

Bevorzugte Telomere sind solche der Formel (V)

H-(C_{w}H_{2w})ₖP(O)(OMe) (CₓH₂ₓ)ₗ-H (V)

wobei in Formel (V), unabhängig voneinander,
k 1 bis 9, l 1 bis 9, w 2 bis 9 und x 2 bis 9 und Me Mg, Ca, Al, Sb, Sn, Ge, Ti, Fe, Zr, Zn, Ce, Bi, Sr, Mn, Li, Na und/oder K bedeuten.

Bevorzugt liegen die Telomere als Al-, Ti-, Fe- und/oder Zn-Salz vor.

Bei Verwendung von Ethylen als Olefin bei der Herstellung der erfindungsgemäßen Dialkylphosphinsäuresalze entstehen bevorzugt Telomere des Typs Ethylbutylphosphinsäure, Dibutylphosphinsäure, Ethylhexylphosphinsäure, Butylhexylphosphinsäure, Ethyloctylphosphinat usw. und/oder deren Salze.

Bei Propen ist die Abfolge sinngemäß.

Bevorzugte Olefine sind Ethen, Propen, 1-Buten, 2-Buten, 1-Penten, 1-Hexen und 1-Octen.

Die Stereochemie erlaubt auch die Bildung von verzweigten Alkylketten, z. B. sec-Butylethylphosphinat, 1-Ethylbutyl-Butyl-phosphinat, Ethyl-1-Methylpentyl-phosphinat, Di-sec-Butylphosphinat (Di-1-Methyl-propylphosphinat) usw.

Telomere selbst sind phosphorhaltige Verbindungen. Ihr Gehalt wird in Prozent aller Phosphor enhaltenden Inhaltsstoffe angegeben (P-%). Er wird mittels ³¹P-NMR bestimmt.

Die in Anspruch 6 gennannten Telomer-Anionen der Formel (VI)

H-(C_{w}H_{2w})ₖP(O)(O⁽⁻⁾)(CₓH₂ₓ)ₗ-H (VI)

können bevorzugt in das Kristallgitter eines Dialkylphosphinsäuresalzes eingebaut sein. Damit liegen dann Dialkylphosphinsäure-Telomersalze vor.

Für die Stabilität der Dialkylphosphinsäuresalze und der Dialkylphosphinsäure-Telomersalze gegen Entmischung beim Rütteln sind geringe Teilchengrößen bevorzugt.

Besonders bevorzugt sind mittlere Teilchengrößen d₅₀ von
Dialkylphosphinsäuresalze: 0,01 - 1000 µm,
Dialkylphosphinsäure-Telomersalz: 0,01 - 1000 µm,
Dialkylphosphinsäure-Telomersalz-Cofällungen: 0,01 - 1000 µm,
physikalische Dialkylphosphinsäure-Telomersalz-Mischungen: 0,01 - 1000 µm,
Besonders bevorzugt sind mittlere Teilchengrößen d₅₀ von
Dialkylphosphinsäuresalze: 0,1 - 90 µm,
Dialkylphosphinsäure-Telomersalz: 0,1 - 90 µm,
Dialkylphosphinsäure-Telomersalz-Cofällungen: 0,1 - 90 µm,
physikalische Dialkylphosphinsäure-Telomersalz-Mischungen: 0,1 - 90 µm,

Bevorzugt entstammen die Polymere aus der Gruppe der thermoplastischen Polymere wie Polyester, Polystyrol oder Polyamid und/oder der duroplastischen Polymere.

Bevorzugt handelt es sich bei den Polymeren um Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol 143E (BASF), Poly-(p-methylstyrol), Poly-(alpha-methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Polymeren um Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon^{®} 4, Fa. DuPont), Polyamid 4/6 (Poly(tetramethylen-adipamid), Poly-(tetramethylen-adipinsäurediamid), Nylon^{®} 4/6, Fa. DuPont), Polyamid 6 (Polycaprolactam, Poly-6-aminohexansäure, Nylon^{®} 6, Fa. DuPont, Akulon^{®} K122, Fa. DSM; Zytel^{®} 7301, Fa. DuPont; Durethan^{®} B 29, Fa. Bayer), Polyamid 6/6 ((Poly(N,N'-hexamethyleneadipinediamid), Nylon^{®} 6/6 , Fa. DuPont , Zytel^{®} 101, Fa. DuPont; Durethan^{®} A30, Durethan^{®} AKV, Durethan^{®} AM, Fa. Bayer; Ultramid^{®} A3, Fa BASF), Polyamid 6/9 (Poly(hexamethylen nonanediamid), Nylon^{®} 6/9 , Fa. DuPont), Polyamid 6/10 (Poly(hexamethylen sebacamid), Nylon^{®} 6/10 , Fa. DuPont), Polyamid 6/12 (Poly(hexamethylene dodecanediamid), Nylon^{®} 6/12, Fa. DuPont), Polyamid 6/66 (Poly(hexamethylene adipamide-co-caprolactam), Nylon^{®} 6/66 , Fa. DuPont), Polyamid 7 (Poly-7-aminoheptansäure, Nylon^{®} 7, Fa. DuPont), Polyamid 7,7 (Polyheptamethylenpimelamid, Nylon^{®} 7,7, Fa. DuPont), Polyamid 8 (Poly-8-aminooctansäure, Nylon^{®} 8, Fa. DuPont), Polyamid 8,8 (Polyoctamethylensuberamid, Nylon^{®} 8,8, Fa. DuPont), Polyamid 9 (Poly-9-aminononansäure, Nylon^{®} 9, Fa. DuPont), Polyamid 9,9 (Polynonamethylenazelamid, Nylon^{®} 9,9, Fa. DuPont), Polyamid 10 (Poly-10-amino-decansäure, Nylon^{®} 10, Fa. DuPont), Polyamid 10,9 (Poly(decamethylenazelamid), Nylon^{®} 10,9, Fa. DuPont), Polyamid 10,10 (Polydecamethylensebacamid, Nylon^{®} 10,10, Fa. DuPont), Polyamid 11 (Poly-11-aminoundecansäure, Nylon^{®} 11, Fa. DuPont), Polyamid 12 (Polylauryllactam, Nylon^{®} 12 , Fa. DuPont, Grillamid^{®} L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid Polyhexamethylenterephthalamid) und gegebenenfalls einem Elastomer als Modifikator, z. B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Eingesetzt werden können auch aromatische Polyamide wie PA4T, PA6T, PA9T, PA10T, PA11T und/oder MXD6, amorphe Polyamide wie 6I/X und TPE-A "rigid" und "soft".

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex^{®} 2500, Celanex^{®} 2002, Fa Celanese; Ultradur^{®}, FA. BASF), Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

Bevorzugt handelt es sich bei den Polymeren um Polycarbonate, Polyestercarbonate, Polysulfone, Polyethersulfone und Polyetherketone.

Bevorzugt handelt es sich bei den duroplastischen Polymeren um Formaldehyd-, Epoxid-, Melamin- Phenolharz-Polymere und/oder Polyurethane.

Bevorzugt handelt es sich bei den duroplastischen Polymeren um Epoxidharze.

Bevorzugt handelt es sich bei den duroplastischen Polymeren um Epoxidharze, die mit Resolen, Phenolen, Phenolderivaten und/oder Dicyandiamid, Alkoholen und Aminen gehärtet sind.

Bevorzugt handelt es sich bei den Epoxidharzen um Polyepoxidverbindungen.

Bevorzugt stammen die Epoxidharze aus der Gruppe der Novolacke und der Bisphenol A Harze.

Bevorzugt handelt es sich bei dem duroplastischen Polymer um ungesättigte Polyesterharze, Dicyclopentadien-modifizierte ungesättigte Polyester, Polyphenylenether oder Butadien-Polymere; um Block-Copolymere mit einem Polybutadien- oder Polyisopren-Block und einem Block aus Styrol oder alpha-Methylstyrol; um Block-Copolymere mit einem ersten Polybutadien-Block und einem zweiten Polyethylen-Block oder Ethylen-Propylen-Block, um Block-Copolymere mit einem ersten Polyisopren-Block und einem zweiten Polyethylen- oder Ethylen-Propylen-Block.

Bevorzugt handelt es sich bei dem duroplastischen Polymer um ein solches, dass auf epoxidierten pflanzlichen Ölen (epoxidiertes Soyabohnen- /Leinsamenöl), Acrylsäurederivaten (Acrylsäure, Crotonsäure, Isocrotonsäure, Methacrylsäure, Cinnamsäure, Maleinsäure, Fumarsäure, Methylmethacrylsäure) und Hydroxyalkyl-Acrylaten und/oder Hydoxyalkyl-Alkylcrylaten (Hydroxyethylmethacrylat, Hydroxypropyl-methacrylat, Hydroxybutylmethacrylat, Polyethylenglycolmethacrylat) basiert.

Bevorzugt finden die duroplastischen Polymere in elektrischen Schalterteilen, Bauteilen in Automobilbau, Elektrotechnik, Elektronik, Leiterplatten, Prepregs, Vergussmassen für elektronische Bauteile, im Boots- und Rotorblattbau, in GFK-Außenanwendungen, Haushalts- und Sanitäranwendungen, Engineering-Werkstoffen und weiteren Produkten Anwendung.

Bevorzugt handelt es sich bei den duroplastischen Polymeren um ungesättigte Polyesterharze (UP-Harze), die sich von Copolyestern gesättigter und ungesättigter, mehrwertiger insbesondere Dicarbonsäuren oder deren Anhydride mit mehrwertigen Alkoholen, sowie Vinylverbindungen als Vernetzungsmittel ableiten.

UP-Harze werden gehärtet durch radikalische Polymerisation mit Initiatoren (z. B. Peroxiden) und Beschleunigern.

Ungesättigte Polyester können die Estergruppe als Verbindungsglied in der Polymerkette enthalten.

Bevorzugte ungesättigte Dicarbonsäuren und -derivate zur Herstellung der Polyester sind Maleinsäure, Maleinsäureanhydrid und Fumarsäure, Itaconsäure, Citraconsäure, Mesaconsäure. Diese können abgemischt sein mit bis zu 200 Mol-%, bezogen auf die ungesättigten Säurekomponenten, mindestens einer aliphatischen gesättigten oder cycloaliphatischen Dicarbonsäure.

Bevorzugte gesättigte Dicarbonsäuren sind Phthalsäure, Isophthalsäure, Terephthalsäure, Dihydrophthalsäure, Tetrahydrophthalsäure, Hexahydrophthalsäure, Endomethylentetrahydrophthalsäure, Adipinsäure, Bernsteinsäure, Sebacinsäure, Glutarsäure, Methylglutarsäure, Pimelinsäure.

Bevorzugte mehrwertige, insbesondere zweiwertige, gegebenenfalls ungesättigte Alkohole sind die üblichen acyclische oder cyclische Gruppen aufweisenden Alkandiole und Oxaalkandiole.

Bevorzugte mit ungesättigten Polyestern copolymerisierbare ungesättigte Monomere tragen bevorzugt Vinyl-, Vinyliden- oder Allylgruppen, z. B. bevorzugt Styrol, aber auch beispielsweise kernalkylierte bzw. -alkenylierte Styrole, wobei die Alkylgruppen 1 - 4 Kohlenstoffatome enthalten können, z. B. Vinyltoluol, Divinylbenzol, alpha-Methylstyrol, tert.- Butylstyrol; Vinylester von Carbonsäuren mit 2 - 6 Kohlenstoffatomen, bevorzugt Vinylacetat, Vinylpropionat, Vinylbenzoat; Vinylpyridin, Vinylnaphthalin, Vinylcyclohexan, Acrylsäure und Methacrylsäure und/oder ihre Ester (vorzugsweise Vinyl-, Allyl und Methallylester) mit 1 - 4 Kohlenstoffatomen in der Alkoholkomponente, ihre Amide und Nitrile, Maleinsäureanhydrid, -halb- und -diester mit 1 - 4 Kohlenstoffatomen in der Alkoholkomponente, -halb- und -diamide oder cyclische Imide wie Butylacrylat, Methylmethacrylat, Acrylnitril, N-Methylmaleinimid oder N-Cyclohexylmaleinimid; Allylverbindungen wie Allylbenzol und Allylester wie Allylacetat, Phthalsäurediallylester, Isophthalsäurediallylester, Fumarsäurediallyl-ester, Allylcarbonate, Diallylphthallate, Diallylcarbonate, Triallylphosphat und Triallylcyanurat.

Bevorzugte Vinylverbindung zur Vernetzung ist Styrol.

Bevorzugte ungesättigte Polyester können die Estergruppe auch in der Seitenkette tragen wie z. B. Polyacrylester und Polymethacrylester.

Bevorzugte Härtersysteme sind Peroxide und Beschleuniger.

Bevorzugte Beschleuniger sind Metallcoinitiatoren und aromatische Amine und/oder UV-Licht und Photosensibilisatoren, z. B. Benzoinether sowie Azokatalysatoren wie Azoisobutyronitril, Mercaptane wie Laurylmercaptan, Bis-(2-ethylhexyl)sulfid und Bis-(2-mercaptoethyl)sulfid.

Ein Verfahren zur Herstellung von flammgeschützten Copolymerisaten ist dadurch gekennzeichnet, dass man mindestens ein ethylenisch ungesättigtes Dicarbonsäureanhydrid, abgeleitet von mindestens einer C₄-C₈-Dicarbonsäure, mindestens eine vinylaromatische Verbindung und mindestens einem Polyol copolymerisiert und dann mit den erfindungsgemäßen Flammschutzmittelmischungen umsetzt.

Bevorzugt einsetzbar sind Dicyclopentadien-modifizierte ungesättigte Polyester, die durch Reaktion von Dicyclopentadien, Maleinsäureanhydrid, Wasser, gesättigter Alkohol und gegebenenfalls einer weiteren mehrwertige Säure erhalten werden. Der Polyester wird mit einem radikalisch polymerisierbaren Monomer wie Styrol zum Harz vernetzt.

Bevorzugt handelt es sich bei den Polymeren um vernetzte Polymere, die sich von Aldehyden bzw. von Phenolen, Harnstoff oder Melamin ableiten, wie Phenol-Formaldehyd-, Harnstoff-Formaldehyd- und Melamin-Formaldehydharze.

Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugte Duroplasten sind Polymere aus der Klasse der Cyanatester, Cyanatester/Bismaleimid-Copolymer, Bismaleimid-Triazin-Epoxy-Blends und Butadien-Polymere.

Bevorzugte Butadien-Polymere sind Blockcopolymere, die 70 - 95 Gew.-% ein oder mehrerer Monovinylsubstitutierter aromatischer Kohlenwasserstoffverbindung mit 8 - 18 C-Atomen und 30 - 5 % Gew.-% eines oder mehrerer konjugierter Diene mit 4 - 12 C-Atomen und wahlweise Vernetzer enthalten.

Bevorzugt werden die erfindungsgemäße Flammschutzmittelmischungen auch in Harzsystemen verwendet, die aus Polybutadien- oder Polyisopren-Harzen oder Mischungen derselben mit ungesättigten Butadien- oder Isopren-enthaltenden Polymeren bestehen, die an einer Vernetzung teilnehmen können.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. von Bisphenol-A-diglycidylethern, Bisphenol-F-di-glycidylethern, die mittels üblichen Härtern und/oder Beschleunigern vernetzt werden.

Geeignete Glycidylverbindungen sind Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen.

Geeignete Härter sind aliphatische, cycloaliphatische, aromatische und heterocyclische Amine oder Polyamine wie Ethylendiamin, Diethylentriamin Triethylentetramin, Propan-1,3-diamin, Hexamethylendiamin, Aminoethylpiperazin, Isophorondiamin, Polyamidoamin, Diaminodiphenylmethan, Diaminodiphenylether, Diaminodiphenolsulfone, Anilin-Formaldehyd-Harze, 2,2,4-Trimethylhexan-1,6-diamin, m-Xylylendiamin, Bis(4-aminocyclohexyl)methan, 2,2-Bis(4-aminocyclohexyl)propan, 3-Aminomethyl-3,5,5-trimethylcyclohexylamin (Isophorondiamin), Polyamidoamine, Cyanguanidin und Dicyandiamid, ebenso mehrbasige Säuren oder deren Anhydride wie z. B. Phthalsäureanhydrid, Maleinsäureanhydrid, Tetrahydrophthalsäureanhydrid, Methyltetrahydrophthalsäureanhydrid, Hexahydrophthalsäureanhydrid und Methylhexahydrophthalsäureanhydrid sowie Phenole wie z. B. Phenol-Novolak-Harz, Cresol-Novolak-Harz, Dicyclopentadien-Phenol-Addukt-Harz, Phenolaralkyl-Harz, Cresolaralkyl-Harz, Naphtholaralkyl-Harz, Biphenol-modifiziertes Phenolaralkyl-Harz, Phenoltrimethylolmethan-Harz, Tetraphenylolethan-Harz, Naphthol-Novolak-Harz, Naphthol-Phenol-Kocondensat-Harz, Naphthol-Cresol-Kocondensat-Harz, Biphenol- modifiziertes Phenol-Harz und Aminotriazinmodifiziertes Phenol-Harz. Alle Härter können alleine oder in Kombination miteinander eingesetzt werden.

Geeignete Katalysatoren bzw. Beschleuniger für die Vernetzung bei der Polymerisation sind tertiäre Amine, Benzyldimethylamin, N-Alkylpyridine, Imidazol, 1-Methylimidazol, 2-Methylimidazol, 2-Ethyl-4-methylimidazol, 2-Ethyl-4-methylimidazol, 2-Phenylimidazol, 2-Heptadecylimidazol, Metallsalze organischer Säuren, Lewis Säuren und Amin-Komplex-Salze.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze. Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugte Polyester-Polyole werden durch Polykondensation eines Polyalkoholes wie Ethylenglykol, Diethylenglykol, Propylenglykol, 1,4-Butandiol, 1,5-Pentandiol, Methylpentandiol, 1,6-Hexandiol, Trimethylolpropan, Glycerin, Pentaerythritol, Diglycerol, Traubenzucker und/oder Sorbit, mit einer dibasischen Säure wie Oxalsäure, Malonsäure, Bernsteinsäure, Weinsäure, Adipinsäure, Sebacinsäure, Maleinsäure, Fumarsäure, Phthalsäure und/oder Terephthalsäure erhalten. Diese Polyester-Polyole können alleine oder in Kombination benutzt werden.

Geeignete Polyisocyanate sind aromatische, alicyclische und/oder aliphatische Polyisocyanate mit nicht weniger als zwei Isocyanat-Groupen und Mischungen davon. Bevorzugt sind aromatische Polyisocyanate wie Tolyldiisocyanat, Methylendiphenyldiisocyanat, Naphthylendiisocyanate, Xylylendiisocyanat, Tris-4-isocyanatophenylmethan und Polymethylenpolyphenylendiisocyanate; alicyclische Polyisocyanate wie Methylendiphenyldiisocyanat, Tolyldiisocyanat; aliphatische Polyisocyanate und Hexamethylendiisocyanat, Isophorendiisocyanat, Demeryldiisocyanat, 1,1-Methylenbis(4-isocyanatocyclohexan-4,4'-Diisocyanatodicyclohexylmethan-Isomerengemisch, 1,4-Cyclohexyldiisocyanat, Desmodur^{®}-Typen (Bayer) und Lysindiisocyanat und Mischungen davon.

Geeignete Polyisocyanate sind modifizierte Produkte, die durch Reaktion von Polyisocyanat mit Polyol, Harnstoff, Carbodiimid und/oder Biuret erhalten werden.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethan-acrylaten oder Polyester-acrylaten.

Bevorzugt handelt es sich bei den Polymeren um Mischungen (Polyblends) der vorgenannten Polymeren, wie z. B. PP/EPDM (Polypropylen/ Ethylen-Propylen-Dien-Kautschuk), Polyamid/EPDM oder ABS (Polyamid/Ethylen-Propylen-DienKautschuk oder Acrylnitril-Butadien-Styrol), PVC/EVA (Polyvinylchlorid/ Ethylenvinylacetat), PVC/ABS (Polyvinylchlorid/Acrylnitril-Butadien-Styrol), PVC/MBS (Polyvinylchlorid/ Methacrylat-Butadien-Styrol), PC/ABS (Polycarbonat/Acrylnitril-Butadien-Styrol), PBTP/ABS (Polybutylenterephthalat /Acrylnitril-Butadien-Styrol), PC/ASA (Polycarbonat/Acrylester-Styrol-Acrylnitril), PC/PBT (Polycarbonat/Polybutylen-terephthalat), PVC/CPE (Polyvinylchlorid/chloriertes Polyethylen), PVC/Acrylate (Polyvinylchlorid/Acrylate, POM/thermoplastisches PUR (Polyoxymethylen / thermoplastisches Polyurethan), PC/thermoplastisches PUR (Polycarbonat / thermoplastisches Polyurethan), POM/Acrylat (Polyoxymethylen/Acrylat), POM/MBS (Polyoxymethylen/ Methacrylat-Butadien-Styrol), PPO/HIPS (Polyphenylenoxid /High impact polystyrol), PPO/PA 6.6 (Polyphenylenoxid /Polyamid 6.6) und Copolymere, PA/HDPE (Polyamid /High Density Polyethylen), PA/PP (Polyamid / Polyethylen), PA/PPO (Polyamid / Polyphenylenoxid), PBT/PC/ABS (Polybutylenterephthalat / Polycarbonat / Acrylnitril-Butadien-Styrol) und/ oder PBT/PET/PC (Polybutylenterephthalat / Polyethylenterephthalat / Polycarbonat).

Bevorzugt weist die hergestellte Formmasse eine rechteckige Form mit regelmäßiger oder unregelmäßiger Grundfläche, Würfelform, Quaderform, Kissenform, Prismenform auf.

Die erfindungsgemäßen Flammschutzmittelmischungen können auch in Elastomeren wie etwa Nitrilkautschuk, Nitrilkautschuk mit Carboxyl-Gruppen und Carboxyl-terminierten Butadien-Acrylnitril, Chloropren-Kautschuk, Butadien-Kautschuk, Acrylnitril-Butadien-Kautschuk, Styrol-Butadien-Kautschuk, Butadien-Kautschuk mit Acrylharz und thermoplastischem Polyimid, urethanmodifiziertes Copolyesterpolymer und anderen Elastomeren eingesetzt werden.

Bevorzugte weitere Additive in den erfindungsgemäßen Flammschutzmittel-Mischungen sind aus der Gruppe der Carbodiimide und/oder (Poly-)isocyanate.

Bevorzugte weitere Additive kommen aus der Gruppe der sterisch gehinderten Phenole (z. B. Hostanox^{®} OSP 1), sterisch gehinderten Amine und Lichtstabilisatoren (z. B. Chimasorb^{®} 944, Hostavin^{®}-Typen), Phosphonite und Antioxidantien (z. B. Sandostab^{®} PEPQ der Fa. Clariant) und Trennmittel (Licomont^{®}-Typen der Fa. Clariant).

Bevorzugte Füllstoffe in den erfindungsgemäßen Flammschutzmittel-Mischungen sind Sauerstoffverbindungen des Siliciums, Magnesiumverbindungen, z. B. Metallcarbonate von Metallen der zweiten Hauptgruppe des Periodensystems, Magnesiumoxid, Magnesiumhydroxid, Hydrotalcite, Dihydrotalcit, Magnesium-Carbonate oder Magnesium-Calcium-Carbonate, Calciumverbindungen, z. B. Calciumhydroxid, Calciumoxid, Hydrocalumit, Aluminiumverbindungen, z. B. Aluminiumoxid, Aluminiumhydroxid, Böhmit, Gibbsit oder Aluminiumphosphat, roter Phosphor, Zink- und/oder Aluminiumverbindungen.

Bevorzugte weitere Füllstoffe sind Glaskugeln.

Glasfasern werden bevorzugt als Verstärkungsstoffe eingesetzt.

Erfindungsgemäß einsetzbare Compoundieraggregate sind Mehrzonenschnecken-Extruder mit Dreizonenschnecken und/oder Kurzkompressionsschnecken.

Erfindungsgemäß einsetzbare Compoundieraggregate sind auch Ko-Kneter z. B. von Fa. Coperion Buss Compounding Systems, CH-Pratteln, z. B. MDK/E46-11D und/oder Laborkneter (MDK 46 der Firma Buss, Schweiz mit L=11D).

Erfindungsgemäß einsetzbare Compoundieraggregate sind Doppelschneckenextruder z. B. der Fa. Coperion Werner & Pfleiderer GmbH & Co.KG, Stuttgart (ZSK 25, ZSK30, ZSK 40, ZSK 58, ZSK MEGAcompounder 40, 50, 58, 70, 92, 119, 177, 250, 320, 350, 380) und/oder der Fa. Berstorff GmbH, Hannover, Leistritz Extrusionstechnik GmbH, Nürnberg.

Erfindungsgemäß einsetzbare Compoundieraggregate sind Ring-Extruder z. B. der Fa. 3+Extruder GmbH, Laufen mit einem Ring von drei bis zwölf kleinen Schnecken, die um einem statischen Kern rotieren und/oder Planetwalzenextruder z. B. der Fa. Entex, Bochum und/oder Entgasungs-Extruder und/oder Kaskadenextruder und/oder Maillefer-Schecken.

Erfindungsgemäß einsetzbare Compoundieraggregate sind Compounder mit gegenläufiger Doppelschnecke z. B. Compex 37- bzw. -70-Typen der Fa. Krauss-Maffei Berstorff.

Erfindungsgemäße wirksame Schneckenlängen (L) sind bei Einwellenextrudern bzw. Einschneckenextrudern 20 bis 40D; bei Doppelschneckenextrudern 8 bis 48D und bei Mehrzonenschneckenextudern z. B. 25D mit Einzugzone (L=10D), Übergangszone (L=6D) und Ausstoßzone (L=9D).

Die Erfindung betrifft zudem die Verwendung der erfindungsgemäßen Flammschutzmittelmischung nach einem oder mehreren der Ansprüche 1 bis 19 in oder für Steckverbinder, stromberührten Teilen in Stromverteilern (FI-Schutz), Platinen, Vergußmassen, Stromsteckern, Schutzschaltern, Lampengehäuse, LED Gehäuse, Kondensatorgehäuse, Spulenkörper und Ventilatoren, Schutzkontakte, Stecker, in/auf Platinen, Gehäuse für Stecker, Kabel, flexible Leiterplatten, Ladekabel für Handys, Motorabdeckungen, Textilbeschichtungen und anderen Produkten.

Hierzu gehören Formkörper in Form von Bauteilen für den Elektro/Elektronikbereich, insbesondere für Teile von Leiterplatten, Gehäusen, Folien, Leitungen, Schaltern, Verteilern, Relais, Widerständen, Kondensatoren, Spulen, Lampen, Dioden, LED, Transistoren, Konnektoren, Reglern, Speichern und Sensoren, in Form von großflächigen Bauteilen, insbesondere von Gehäuseteilen für Schaltschränke und in Form aufwendig gestalteter Bauteile mit anspruchsvoller Geometrie.

Bevorzugt beträgt bei solchen Formkörpern die Wandstärke weniger als 0,5 mm, kann aber auch mehr als 1,5 mm (bis zu 10 mm) betragen. Besonders geeignet sind weniger als 1,5 mm, mehr bevorzugt weniger als 1 mm und besonders bevorzugt weniger als 0,5 mm

Die erfindungsgemäße Flammschutzmittelmischung wird bevorzugt mit Glasfasern mit einem arithmetischen Mittel der Länge von 100 bis 220 µm zur Herstellung von flammgeschützten Polyamidformmassen und/oder Formteilen eingesetzt, wobei der Herstellungsprozess für die Polyamidformmasse bzw. das Formteil so eingestellt wird, dass in der resultierenden Polyamidformmasse bzw. dem Formteil die Glasfasern ein arithmetisches Mittel der Länge im Bereich von 100 bis 220 µm aufweisen und wobei die Polyamidformmasse bzw. das Formteil bevorzugt nach IEC 60695-11-10 der (UL94) als V-0 klassifiziert ist.

Herstellung, Verarbeitung und Prüfung von flammgeschützten PolymerFormmassen und Polymer-Formkörpern.

Die Dialkylphosphinsäuresalze (dies schließt die Dialkylphosphinsäure-Telomersalze mit ein) werden mit dem Polymergranulat und evtl. Additiven vermischt und über den Seiteneinzug eines Doppelschnecken-Extruders (Typ Leistritz ZSE 27/44D) bei Temperaturen von 230 bis 260°C (glasfaserverstärktes PBT), 260 bis 310 °C (PA 6.6) bzw. bei 250 - 275 °C (PA 6) in das Polymer eingearbeitet. Die Glasfasern wurden über einen zweiten Seiteneinzug zugegeben. Der homogenisierte Polymerstrang wurde abgezogen, im Wasserbad gekühlt und anschließend zu flammgeschützten Polymerformmassen granuliert.

Nach ausreichender Trocknung wurden die Formmassen auf einer Spritzgießmaschine (Typ Arburg 320 C Allrounder) bei Massetemperaturen von 240 bis 300 °C zu flammgeschützten Polymer-Formkörper verarbeitet. Sie können als Prüfkörer verwendet und anhand des UL 94-Tests (Underwriter Laboratories) auf Flammwidrigkeit geprüft und klassifiziert werden.

Bestimmung des Verarbeitungsfensters von PA-GF30-Compound im isothermen DSC-Test
Entsprechend der vorgenannten allgemeinen Vorschrift werden flammgeschützte Polymerformmassen und flammgeschützte Polymerformkörper hergestellt. Die Zusammensetzung ist 49,7 Gew.-% Polyamid (Ultramid^{®} A 27 E 01 der Fa. BASF SE), 30 Gew.-% Glasfasern (PPG Glasfaser HP 3610 EC10 der Fa. PPG), 12,6 Gew.-% erfindungsgemäße Dialkylphosphinsäuresalze (dies schließt die Dialkylphosphinsäure-Telomersalze mit ein) entsprechend der Beispiele, 6,6 Gew.-% Melaminpolyphosphat (Melapur^{®} 200/70 der Fa. BASF, 0,8 Gew.-% Zinkborat (Firebrake^{®} 500 der Fa. Rio Tinto Minerals), 0,3% Wachs (Licowax^{®} E Gran der Fa. Clariant).

Da die untere Grenze des Verarbeitungsfensters nicht beeinflusst wird, wird als Maß für das Verarbeitungsfenster die Zersetzung der flammgeschützte Polymerformmasse an der oberen Grenze bestimmt. Dazu dient der Gewichtsverlust bei einer definierten Temperatur.

Mit DSC (Differentialthermoanalyse) wird an Luft nach 60 min Haltezeit der Gewichtsverlust bei 330 °C in Gew.-% bestimmt.

Die Rieselfähigkeit der erfindungsgemäßen Flammschutzmittelmischung wird nach Pfrengle (DIN ISO 4324 Tenside, Pulver und Granulate, Bestimmung des Schüttwinkels, Dez. 1983, Beuth Verlag Berlin) bestimmt.

Die vorgenannte Rieselfähigkeit wird durch die Ermittlung der Höhe des Kegels eines Pulvers oder Granulates beziehungsweise des Verhältnisses von Kegelradius zu Kegelhöhe bestimmt. Der Kegel wird erzeugt, indem eine spezielle Menge der zu untersuchenden Substanz in einer definierten Apparatur durch einen speziellen Trichter ausgeschüttet wird. Der definierte Kegelradius wird erzeugt, indem der Kegel aufgeschüttet wird, bis das Produkt über eine vom Untergrund erhabene kreisrunde Platte überfließt. Der Radius der Platte ist festgelegt. Der Trichter hat einen Innendurchmesser von 10 mm. Die Platte hat einen Radius von 50 mm. Es werden 5 Bestimmungen durchgeführt und gemittelt. Die Höhe wird in Millimeter mit einer Messleiste von der Platte ausgehend, zum Scheitel des Kegels ausgemessen. Das Verhältnis von Kegelradius (50 mm) zu Kegelhöhe wird aus dem Mittelwert berechnet.

An einer Flammschutzmittelmischung nach dem Stand der Technik wurden Schüttkegelhöhen von 29,9 bis 49,9 mm entsprechend einer Spanne von 20 mm bestimmt und Verhältnisse von Radius zu Höhe (=cot alpha) von 1,67 bis 1,00 entsprechend einer Spanne von 0,67.

Der Schüttwinkel ist der Winkel zwischen der Geraden, die durch den Kegelboden gebildet wird und der Geraden, die die Kegelböschung bildet, d.h. von Kegelspitze und Kegelradius festgelegt wird.

An Prüfkörpern aus jeder Mischung wurden die Brandklasse UL 94 (Underwriter Laboratories) an Probekörpern der Dicke 1,5 mm bestimmt.
Nach UL 94 ergeben sich folgende Brandklassen:
V-0 kein Nachbrennen länger als 10 sec, Summe der Nachbrennzeiten bei 10 Beflammungen nicht grösser als 50 sec, kein brennendes Abtropfen, kein vollständiges Abbrennen der Probe, kein Nachglühen der Proben länger als 30 sec nach Beflammungsende
V-1 kein Nachbrennen länger als 30 sec nach Beflammungsende, Summe der Nachbrennzeiten bei 10 Beflammungen nicht grösser als 250 sec, kein Nachglühen der Proben länger als 60 sec nach Beflammungsende, übrige Kriterien wie bei V-0
V-2 Zündung der Watte durch brennendes Abtropfen, übrige Kriterien wie bei V-1
Nicht klassifizierbar (nkl) erfüllt nicht die Brandklasse V-2.

### Beispiel 1

Nach DE-A-10359815 wird eine Natriumdiethylphosphinatlösung mit 7,71 Gew.-% P-Gehalt hergestellt. 2652 g dieser Lösung werden zeitgleich mit 1364 g Aluminiumsulfatlösung, der 70 mg 22 Gew.-%-ige Eisen(III)sulfatlösung zugesetzt sind, bei 80 °C zu entionisiertem Wasser dosiert. Die Kristallsuspension wird heiß durch eine Saugnutsche filtriert und mit der 15-fachen Menge heißen Wassers gewaschen. Das filterfeuchte Produkt wird ca. 18 g bei 120 °C unter Stickstoffatmosphäre in einem Trockenschrank getrocknet und enthält 0,2 Gew.-% Restfeuchte (RF) und 18 ppm Eisen.

Das Eisen ist in das Kristallgitter der Diethylphosphinsäuresalzes eingebaut.

Die thermische Beständigkeit und das Verarbeitungsfenster (beide siehe Tabelle) sind reinem Aluminiumdiethylphosphinat (Vergleichsbeispiel 7) überlegen. Die thermische Beständigkeit wird am erfindungsgemäßen Dialkylphosphinsäuresalz und das Verarbeitungsfenster an der flammgeschützten polymeren Formmasse bestimmt.

### Beispiel 2

Nach DE-A-10359815 wird eine Natriumdiethylphosphinatlösung mit sec-Butylethylphosphinat (1-Methylpropyl-Ethylphosphinat) und 7,71 Gew.-% P-Gehalt hergestellt. Nach Beispiel 1 wird sie unter Verwendung einer 0,2 g 22 Gew.-%-igen Eisen(III)sulfatlösung zu einem Produkt verarbeitet, das 0,1 Gew.-% RF, 0,9 P-% sec-Butylethylphosphinat und 52 ppm Eisen enthält. Das Eisen ist in das Kristallgitter des Diethylphosphinsäure-Telomer-Salzes eingebaut.

Die thermische Beständigkeit und das Verarbeitungsfenster (beide siehe Tabelle) sind reinem Aluminiumdiethylphosphinat (Vergleichsbeispiel 7) überlegen. Die thermische Beständigkeit wird am erfindungsgemäßen Diethylphosphinsäure-Telomer-Salz und das Verarbeitungsfenster an der flammgeschützten polymeren Formmasse bestimmt.

### Beispiel 3

Nach DE-A-10359815 wird eine Natriumdiethylphosphinatlösung mit n-Butylethylphosphinat und 7,71 Gew.-% P-Gehalt hergestellt. Nach Beispiel 1 wird sie unter Verwendung von 0,2 g 22 Gew.-%-ige Eisen(III)sulfatlösung zu einem Produkt verarbeitet, das 0,1 Gew.-% RF, 1,8 P-% n-Butylethylphosphinat und 52 ppm Eisen enthält.

Das Eisen ist in das Kristallgitter des Diethylphosphinsäure-Telomer-Salzes eingebaut.

Die thermische Beständigkeit und das Verarbeitungsfenster (beide siehe Tabelle) sind reinem Aluminiumdiethylphosphinat (Vergleichsbeispiel 7) überlegen. Die thermische Beständigkeit wird am erfindungsgemäßen Diethylphosphinsäure-Telomer-Salz und das Verarbeitungsfenster an der flammgeschützten polymeren Formmasse bestimmt.

### Beispiel 4

Nach DE-A-10359815 wird eine Natriumdiethylphosphinatlösung mit n-Butylethylphosphinat und 7,71 Gew.-% P-Gehalt hergestellt. Nach Beispiel 1 wird sie unter Verwendung von 0,2 g 22 Gew.-%-ige Eisen(III)sulfatlösung zu einem Produkt verarbeitet, das 0,2 Gew.-% RF, 0,9 P-% n-Butylethylphosphinat und 52 ppm Eisen enthält.

Das Eisen ist in das Kristallgitter des Diethylphosphinsäure-Telomer-Salzes eingebaut.

Die thermische Beständigkeit und das Verarbeitungsfenster (beide siehe Tabelle) sind reinem Aluminiumdiethylphosphinat (Vergleichsbeispiel 7) überlegen. Die thermische Beständigkeit wird am erfindungsgemäßen Diethylphosphinsäure-Telomer-Salz
und das Verarbeitungsfenster an der flammgeschützten polymeren Formmasse bestimmt.

### Beispiel 5

Nach DE-A-10359815 wird eine Natriumdiethylphosphinatlösung mit n-Butylethylphosphinat und 7,71 Gew.-% P-Gehalt hergestellt. Nach Beispiel 1 wird sie unter Verwendung von 3,9 g 22 Gew.-%-iger Eisen(III)sulfatlösung zu einem Produkt verarbeitet, das 0,2 Gew.-% RF, 4 P-% n-Butylethylphosphinat und 1019 ppm Eisen enthält.

Das Eisen ist in das Kristallgitter des Diethylphosphinsäure-Telomer-Salzes eingebaut.

Die thermische Beständigkeit und das Verarbeitungsfenster (beide siehe Tabelle) sind reinem Aluminiumdiethylphosphinat (Vergleichsbeispiel 7) überlegen. Die thermische Beständigkeit wird am erfindungsgemäßen Diethylphosphinsäure-Telomer-Salz und das Verarbeitungsfenster an der flammgeschützten polymeren Formmasse bestimmt.

### Beispiel 6

Nach DE-A-10359815 wird eine Natriumdiethylphosphinatlösung mit sec-Butylethylphosphinat, n-Butylethylphosphinat und 7,71 Gew.-% P-Gehalt hergestellt. Nach Beispiel 1 wird sie unter Verwendung von 52 g 22 Gew.-%-iger Eisen(III)sulfatlösung zu einem Produkt verarbeitet, das 0,3 Gew.-% RF, 0,9 P-% sec-Butylethylphosphinat, 10 P-% n-Butylethylphosphinat und 13783 ppm Eisen enthält.

Das Eisen ist in das Kristallgitter des Diethylphosphinsäure-Telomer-Salzes eingebaut.

Die thermische Beständigkeit und das Verarbeitungsfenster (beide siehe Tabelle) sind reinem Aluminiumdiethylphosphinat (Vergleichsbeispiel 7) überlegen. Die thermische Beständigkeit wird am erfindungsgemäßen Diethylphosphinsäure-Telomer-Salz und das Verarbeitungsfenster an der flammgeschützten polymeren Formmasse bestimmt.

### Beispiel 7 (Vergleich)

Aluminiumdiethylphosphinat ohne einen Gehalt an Telomer und/oder Eisen zeigt die in Tabelle 2 aufgeführte thermische Beständigkeit und Verarbeitungsfenster.

**Tabelle 2: Einsatzmengen bei den Kristallisationen [g]**

| Beispiel | Einsatzmengen | | | | | Ausbeute [g] | Produktanalyse | | | | Therm. Beständigkeit [°C] | Verarbeitungsfenster [%] | BET-Oberfläche [m²/g] | Rüttel-/ Stampfdichte [g/L] |
|---|---|---|---|---|---|---|---|---|---|---|---|---|---|---|
| | H₂O [g] | Diethyl-phosphin-säure, Natrium-salz, wässrige Lösung 7,71% P [g] | Al-Sulfat Lösung 4,35% Al [g] | Fe-Sulfat Lösung 22% Fe [g] | Diethylphosphinsäure, Aluminiumsalz [g] | | Rest-feuchte [%] | Fe-Gehalt [ppm Fe] | sec-Butyl-ethyl-phos-phinat [P-%] | n-Butylethylphosphinat [P-%] | | | | |
| 1 | 3800 | 2652 | 1364 | 0,07 | - | 835 | 0,2 | 18 | - | - | 334 | 5,0 | 1,8 | 560 |
| 2 | 3800 | 2652 | 1364 | 0,20 | - | 845 | 0,1 | 52 | 0,1 | - | 348 | 4,0 | 2,4 | 570 |
| 3 | 3800 | 2652 | 1364 | 0,20 | - | 840 | 0,1 | 52 | - | 1,8 | 374 | 3,8 | 1,8 | 560 |
| 4 | 3800 | 2652 | 1364 | 0,20 | - | 840 | 0,2 | 52 | - | 0,9 | 349 | 4,0 | 3,6 | 610 |
| 5 | 3800 | 2652 | 1355 | 3,90 | - | 842 | 0,2 | 1019 | - | 4 | 366 | 4,8 | 2,0 | 560 |
| 6 | 3800 | 2652 | 1238 | 52,0 | - | 830 | 0,3 | 13783 | 0,9 | 10 | 360 | 4,5 | 3,6 | 580 |
| 7 Vgl. | - | - | - | - | 1000 | - | 0,2 | 0 | - | - | 325 | 8 | 1,8 | 610 |

Die erfindungsgemäßen Dialkylphosphinsäuresalze und Dialkylphosphinsäure-Telomer-Salze mit einem definierten Eisengehalt weisen ein sichtbar größeres (breiteres) Verarbeitungsfester als ein Diethylphosphinsäuresalz auf, das kein Eisen enthält.
Sie zeigen alle eine gute Flammschutzwirkung in PA6.

In der vorgenannten Tabelle wurde die thermische Beständigkeit mit Hilfe der Thermogravimetrie (TGA) gemessen. Die angegebene Temperatur ist die, bei der 2 Gew.-% Gewichtsverlust vorliegen.

Das Verarbeitungsfenster der Polymerformmasse wurde ebenfalls mit der TGA bestimmt. Gemessen wird dabei der Gewichtsverlust in Gew.-% bei 330 °C nach 1 h. Die TGA wird unter Luft-Atmosphäre durchgeführt.

Bei der Polymerformmasse umfasst maximal die erfindungsgemäßen Flammschutzmittelzusammensetzung, Polyamid, MPP Melaminpolyphosphat), Glasfasern, Zinkborat und Wachs.

## Patentansprüche

1. Diorganylphosphinsäuresalze, enthaltend 0,0001 bis 99,9999 Gew.-% Eisen.

2. Diorganylphosphinsäuresalze nach Anspruch 1, **dadurch gekennzeichnet, dass** sie der Formel (I) entsprechen 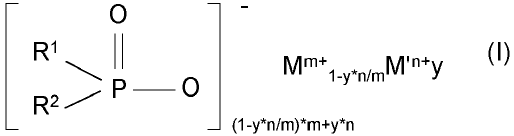 in der
R¹ und R² gleich oder verschieden sind und C₁-C₁₈-Alkyl linear, verzweigt oder cyclisch, C₆-C₁₈-Aryl, C₇-C₁₈-Arylalkyl und/oder C₇-C₁₈-Alkylaryl bedeuten oder miteinander mindestens einen Ring bilden,
y 0,00001 bis 0,091,
m 1 bis 4 und
n 2 bis 3,
M Mg, Ca, Al, Sb, Sn, Ge, Ti, Zr, Zn, Ce, Bi, Sr, Mn, Li, Na und/oder K
und
M' Fe bedeutet.

3. Diorganylphosphinsäuresalze nach Anspruch 2, **dadurch kennzeichnet, dass** in Formel (I) R¹, R² gleich oder verschieden und, unabhängig voneinander, Methyl, Ethyl, n-Propyl, iso-Propyl, n-Butyl, tert.-Butyl, n-Pentyl, 2-Pentyl, 3-Pentyl, 2-Methylbutyl, 3-Methylbutyl (iso-Pentyl), 3-Methylbut-2-yl, 2-Methylbut-2-yl, 2,2-Dimethylpropyl (Neopentyl), Hexyl, Heptyl, Octyl, Nonyl, Decyl, Cyclopentyl, Cyclopentylethyl, Cyclohexyl, Cyclohexylethyl, Phenyl, Phenylethyl, Methylphenyl und/oder Methylphenylethyl bedeuten.

4. Diorganylphosphinsäuresalze nach einem der Ansprüche 1 bis 3, **dadurch gekennzeichnet, dass** sie der Formel (II) entsprechen 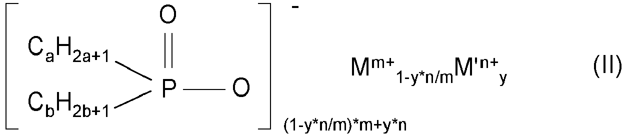 worin
a und b gleich oder verschieden sind und jeweils, unabhängig voneinander, 1 bis 9 bedeuten und die Gruppen CₐH₂ₐ₊₁ und C_{b}H_{2b+1} geradlinig oder verzweigt sein können und
y 0,00001 bis 0,091,
m 1 bis 4 und
n 2 bis 3,
M Mg, Ca, Al, Sb, Sn, Ge, Ti, Zr, Zn, Ce, Bi, Sr, Mn, Li, Na und/oder K und
M' Fe bedeutet.

5. Diorganylphosphinsäuresalze nach einem oder mehreren der Ansprüche 1 bis 4, **dadurch kennzeichnet, dass** das Eisen als Eisen(II)dialkylphosphinate und/oder Eisen(III)dialkylphosphinate vorliegt.

6. Diorganylphosphinsäuresalze nach einem oder mehreren der Ansprüche 1 bis 4, **dadurch kennzeichnet, dass** M und M' mit den Anionen (CₐH₂ₐ₊₁) (C_{b}H_{2b+1})PO₂ als eine einheitliche ionische Verbindung vorliegen.

7. Diorganylphosphinsäuresalze nach einem oder mehreren der Ansprüche 1 bis 6, **dadurch kennzeichnet, dass** sie weiterhin Telomer-Ionen enthalten, wobei es sich bei den Telomer-Ionen um solche der Summenformel (VI) handelt
H-(C_{w}H_{2w})ₖP(O)(O⁽⁻⁾)(CₓH₂ₓ)ₗ-H (VI)
wobei in Formel (VI), unabhängig voneinander,
k 1 bis 9, l 1 bis 9, w 2 bis 9 und x 2 bis 9 bedeuten.

8. Diorganylphosphinsäuresalze nach einem oder mehreren der Ansprüche 1 bis 7, **dadurch gekennzeichnet, dass** in Formel (VI)
w und x jeweils 2 bis 4 und k und l jeweils 1 bis 4 bedeuten.

9. Diorganylphosphinsäuresalze nach einem oder mehreren der Ansprüche 1 bis 7, **dadurch gekennzeichnet, dass** in Formel (VI)
w und x jeweils 2 oder 3 und k und l jeweils 1 bis 3 bedeuten.

10. Diorganylphosphinsäuresalze nach einem oder mehreren der Ansprüche 1 bis 9, **dadurch gekennzeichnet, dass** sie
a) 60 bis 99,8999 P-% Dialkylphosphinsäuresalze der Formel (I) und
b) 0,1 bis 40 P-% Telomer-Ionen der Formel (VI) enthalten,
wobei die Summe von a) und b) 100 P-% ergibt mit der Maßgabe, dass es sich bei den Diorganylphosphinsäuresalzen der Formel (I) und den Telomer-Ionen der Formel (VI) jeweils um unterschiedliche Verbindungen handelt.

11. Diorganylphosphinsäuresalze nach einem oder mehreren der Ansprüche 1 bis 10, **dadurch gekennzeichnet, dass** die Ionen M, M', (CₐH₂ₐ₊₁)(C_{b}H_{2b+1})PO₂⁻, H-(C_{w}H_{2w})ₖPO₂⁻(CₓH₂ₓ)ₗ-H und Anionen der Ethylbutylphosphinsäure, Dibutylphosphinsäure, Ethylhexylphosphinsäure, Butylhexylphosphinsäure, Ethyloctylphosphinsäure, sec-Butylethylphosphinsäure, 1-Ethylbutyl-Butyl-phosphinsäure, Ethyl-1-Methylpentyl-phosphinsäure, Di-sec-Butylphosphinsäure (Di-1-Methyl-propylphosphinsäure), Propyl-Hexylphosphinsäure, Dihexylphosphinsäure, Hexyl-Nonylphosphinsäure, Propyl-Nonylphosphinsäure, Dinonylphosphinsäure, Dipropylphosphinsäure, Butyl-Octylphosphinsäure, Hexyl-Octylphosphinsäure, Dioctylphosphinsäure, Ethyl(cyclopentylethyl)phosphinsäure, Butyl(cyclopentylethyl)phosphininsäure, Ethyl(cyclohexylethyl)phosphinsäure, Butyl(cyclohexylethyl)phosphinsäure, Ethyl(phenylethyl)phosphinsäure, Butyl(phenylethyl)phosphinsäure, Ethyl(4-methylphenylethyl)phosphinsäure, Butyl(4-methylphenylethyl)phosphinsäure, Butylcyclopentylphosphininsäure, Butylcyclohexylethylphosphinsäure, Butylphenylphosphinsäure, Ethyl(4-methylphenyl)phosphinsäure und/oder Butyl(4-methylphenyl)phosphinsäure miteinander eine einheitliche ionische Verbindung darstellen.

12. Diorganylphosphinsäuresalze nach einem oder mehreren der Ansprüche 1 bis 11, **dadurch gekennzeichnet, dass** die Telomer-Ionen in Form ihrer Metallsalze vorliegen, wobei es sich dabei um Metallsalze der Ethylbutylphosphinsäure, Dibutylphosphinsäure, Ethylhexylphosphinsäure, Butylhexylphosphinsäure, Ethyloctylphosphinsäure, sec-Butylethylphosphinsäure, 1-Ethylbutyl-Butyl-phosphinsäure, Ethyl-1-Methylpentyl-phosphinsäure, Di-sec-Butylphosphinsäure (Di-1-Methyl-propylphosphinsäure), Propyl-Hexylphosphinsäure, Dihexylphosphinsäure, Hexyl-Nonylphosphinsäure, Propyl-Nonylphosphinsäure, Dinonylphosphinsäure, Dipropylphosphinsäure, Butyl-Octylphosphinsäure, Hexyl-Octylphosphinsäure, Dioctylphosphinsäure, Ethyl(cyclopentylethyl)phosphinsäure, Butyl(cyclopentylethyl)phosphininsäure, Ethyl(cyclohexylethyl)phosphinsäure, Butyl(cyclohexylethyl)phosphinsäure, Ethyl(phenylethyl)phosphinsäure, Butyl(phenylethyl)phosphinsäure, Ethyl(4-methylphenylethyl)phosphinsäure, Butyl(4-methylphenylethyl)phosphinsäure, Butylcyclopentylphosphininsäure, Butylcyclohexylethylphosphinsäure, Butylphenylphosphinsäure, Ethyl(4-methylphenyl)phosphinsäure und/oder Butyl(4-methylphenyl)phosphinsäure handelt, und das Metall des Metallsalzes aus der Gruppe Mg, Ca, Al, Sb, Sn, Ge, Ti, Fe, Zr, Zn, Ce, Bi, Sr, Mn, Li, Na und/oder K entstammt.

13. Diorganylphosphinsäuresalze nach einem oder mehreren der Ansprüche 1 bis 12, **dadurch gekennzeichnet, dass** sie
eine Teilchengröße von 0,1 bis 1000 µm,
eine Schüttdichte von 80 bis 800 g/l,
eine Stampfdichte von 100 g/l bis 1100 g/l,
einen Schüttwinkel von 5 bis 45 Grad,
eine BET-Oberfläche von 1 bis 40 m²/g,
L-Farbwerte von 85 bis 99,9,
a-Farbwerte von -4 bis +9 und
b-Farbwerte von -2 bis +6 aufweisen.

14. Dialkylphosphinsäuresalze nach einem oder mehreren der Ansprüche 1 bis 13, **dadurch gekennzeichnet, dass** sie
eine Teilchengröße von 0,5 bis 800 µm,
eine Schüttdichte von 80 bis 600 g/l,
eine Stampfdichte von 600 g/l bis 800 g/l und
einen Schüttwinkel von 10 bis 40 Grad aufweisen.

15. Verfahren zur Herstellung von Diorganylphosphinsäuresalzen nach einem oder mehreren der Ansprüche 1 bis 14, **dadurch gekennzeichnet, dass** man
a) in einer Prozessstufe 1 0,9 bis 1,1 Moleküle Olefin pro P an ein wasserlösliches Salz der hypophosphorigen Säure oder der Säure selbst addiert,
b) in einer Prozessstufe 2 0,9 bis 1,1 zusätzliche Moleküle Olefin pro P an das Zwischenprodukt aus a) zu Dialkylphosphinsäure oder deren Salz addiert
c) in einer Prozessstufe 3 ein bis 9 weitere Olefinmoleküle an 0 bis 20 % der Dialkylphosphinatmoleküle aus Prozessstufe 1 addiert, so dass sich Telomere bilden
d) in einer Prozessstufe 4 eine Kristallisation des Zwischenprodukts aus b) oder c) mit einem Metallsalz und einem Eisensalz durchführt.

16. Verfahren zur Herstellung von Diorganylphosphinsäuresalzen nach einem oder mehreren der Ansprüche 1 bis 14, **dadurch gekennzeichnet, dass** man
a) in einer Prozessstufe 1 0,9 bis 1,1 Moleküle Olefin pro P an ein wasserlösliches Salz der hypophosphorigen Säure oder der Säure selbst addiert,
b) in einer Prozessstufe 2 0,9 bis 1,1 zusätzliche Moleküle Olefin pro P an das Zwischenprodukt aus a) zu Dialkylphosphinsäure oder deren Salz addiert
c) in einer Prozessstufe 2 ein bis 9 weitere Olefinmoleküle an 0 bis 20 % der Dialkylphosphinatmoleküle aus Prozessstufe 1 addiert, so dass sich Telomere bilden
d) in einer Prozessstufe 3 eine Kristallisation mit einem Metallsalz und/oder einem Eisensalz durchführt und
e) in einer Prozessstufe 4 eine Cofällung des Zwischenprodukts aus d) mit einem Metallsalz oder einem Eisensalz durchführt.

17. Verfahren zur Herstellung von Diorganylphosphinsäuresalzen nach einem oder mehreren der Ansprüche 1 bis 14, **dadurch gekennzeichnet, dass** man
a) in einer Prozessstufe 1 0,9 bis 1,1 Moleküle Olefin pro P an ein wasserlösliches Salz der hypophosphorigen Säure oder der Säure selbst addiert,
b) in einer Prozessstufe 2 0,9 bis 1,1 zusätzliche Moleküle Olefin pro P an das Zwischenprodukt aus a) zu Dialkylphosphinsäure oder deren Salz addiert
c) in einer Prozessstufe 3 eine Kristallisation mit einem Metallsalz und/oder einem Eisensalz durchführt und
d) danach in einer Prozessstufe 4 die Telomere physikalisch untermischt.

18. Verfahren nach einem oder mehreren der Ansprüche 15 bis 17, **dadurch kennzeichnet, dass** es sich bei den Eisensalzen um Fluoride, Chloride, Bromide, lodide, Iodat, Perchlorat, Oxide, Hydroxide, Peroxide, Superoxide, Sulfate, Hydrogensulfate, Sulfathydrate, Sulfite, Peroxosulfate, Nitride, Phosphide, Nitrate, Nitrathydrate, Nitrite, Phosphate, Peroxophosphate, Phosphite, Hypophosphite, Pyrophosphate, Carbonate, Hydrogencarbonate, Hydroxidcarbonate, Carbonathydrate, Silicate, Hexafluorosilicate, Hexafluorosilicathydrate, Stannate, Borate, Polyborate, Peroxoborate, Thiocyanate, Cyanate, Cyanide, Chromate, Chromite, Molybdate, Permanganate, Formiate, Acetate, Acetathydrate, Trifluoracetathydrate, Propionate, Butyrate, Valerate, Caprylate, Oleate, Stearate, Oxalate, Tartrate, Citrate, basische Citrate, Citrathydrate, Benzoate, Salicylate, Lactate, Lactathydrate, Acrylate, Maleate, Salze der Bernsteinsäure, Salze des Glyzins, Phenolate, Para-Phenolsulfonate, Para-Phenolsulfonathydrate, Acetylacetonathydrate, Tannate, Dimethyldithiocarbamate, Trifluormethansulfonat, Alkylsulfonate und/oder Aralkylsulfonate handelt.

19. Verfahren nach einem oder mehreren der Ansprüche 15 bis 18, **dadurch gekennzeichnet, dass** das Metall des Metallsalzes aus der Gruppe Al, Ti, Fe und/oder Zn entstammt.

20. Verwendung von Diorganylphosphinsäuresalzen nach einem oder mehreren der Ansprüche 1 bis 14 als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

21. Verwendung von Diorganylphosphinsäuresalzen nach einem oder mehreren der Ansprüche 1 bis 14 als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

22. Verwendung nach Anspruch 21, **dadurch gekennzeichnet, dass** die Diorganylphosphinsäuresalze nach einem oder mehreren der Ansprüche 1 bis 13 zusammen mit Synergisten eingesetzt werden, wobei es sich bei den Synergisten um Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphate, Melampolyphosphate, Melempolyphosphate und/oder Melonpolyphosphate; um Melaminkondensationsprodukte wie Melam, Melem und/oder Melon; um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Harnstoffcyanurat, Dicyandiamid und/oder Guanidin; um stickstoffhaltige Phosphate der Formeln (NH₄)_{y}H_{3-y}PO₄ bzw. (NH₄PO₃)_{z}, mit y gleich 1 bis 3 und z gleich 1 bis 10.000; um Aluminiumphosphite, Aluminiumpyrophosphite, Aluminiumphosphonate, Aluminiumpyrophosphonate; um Silicate, Zeolite, Kieselsäuren, Keramikpulver, Zinkverbindungen, z. B. Zinkborat, Zinkcarbonat, Zinkstannat, Zinkhydroxystannat, Zinkphosphat, Zinksulfid, Zinkoxid, Zinkhydroxid, Zinkoxidhydrat, basisches Zink-Sitikat, Zinkmolybdat Magnesiumhydroxid, Hydrotalcit, Magnesiumcarbonat, Calciummagnesiumcarbonat; um Salze der Ethylphosphonsäure, der Propylphosphonsäure, der Butylphosphonsäure, der n-butylphosphonsäure, der sec-Butylphosphonsäureat), der Hexylphosphonsäure und/oder der Octylphosphonsäure handelt.

23. Verwendung nach Anspruch 21 oder 22, **dadurch gekennzeichnet, dass** weitere Additive, wobei es sich dabei um Antioxidantien, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren, Farbstoffe, Pigmente und andere handelt, eingesetzt werden.

24. Verwendung nach einem oder mehreren der Ansprüche 21 bis 23, **dadurch gekennzeichnet, dass** 0,0001 bis 99,7999 Gew.-% Diorganylphosphinsäuresalze nach einem oder mehreren der Ansprüche 1 bis 13, 0,1 bis 40 Gew.-% Synergisten und 0,1 bis 40 Gew.-% Additive eingesetzt werden, wobei die Summe der Komponenten 100 Gew.-% beträgt.

25. Flammgeschützte thermoplastische oder duroplastische Polymerformmasse, Polymer-Formkörper, -Filme, -Fäden und/oder Fasern, enthaltend 0,5 bis 45 Gew.-% Diorganylphosphinsäuresalze nach einem oder mehreren der Ansprüche 1 bis 14, 0,5 bis 95 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt, **dadurch gekennzeichnet, dass** es sich bei dem Polymer um thermoplastische Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe und/oder um duroplastische Polymere der Art ungesättigter Polyester oder Epoxidharze handelt.

## Claims

1. Diorganylphosphinic salts containing 0.0001% to 99.9999% by weight of iron.

2. Diorganylphosphinic salts according to Claim 1, **characterized in that** they conform to the formula (I) 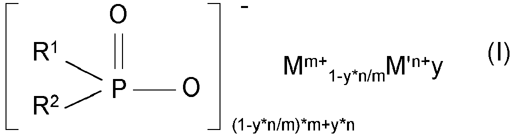 in which
R¹ and R² are the same or different and are C₁-C₁₈-alkyl in linear, branched or cyclic form, C₆-C₁₈-aryl, C₇-C₁₈-arylalkyl and/or C₇-C₁₈-alkylaryl, or together form at least one ring,
y is 0.00001 to 0.091,
m is 1 to 4 and
n is 2 to 3,
M is Mg, Ca, Al, Sb, Sn, Ge, Ti, Zr, Zn, Ce, Bi, Sr, Mn, Li, Na and/or K and
M' is Fe.

3. Diorganylphosphinic salts according to Claim 2, **characterized in that** R¹, R² in formula (I) are the same or different and are independently methyl, ethyl, n-propyl, isopropyl, n-butyl, tert-butyl, n-pentyl, 2-pentyl, 3-pentyl, 2-methylbutyl, 3-methylbutyl (isopentyl), 3-methylbut-2-yl, 2-methylbut-2-yl, 2,2-dimethylpropyl (neopentyl), hexyl, heptyl, octyl, nonyl, decyl, cyclopentyl, cyclopentylethyl, cyclohexyl, cyclohexylethyl, phenyl, phenylethyl, methylphenyl and/or methylphenylethyl.

4. Diorganylphosphinic salts according to any of Claims 1 to 3, **characterized in that** they conform to the formula (II) 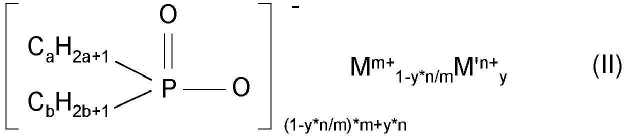 where
a and b are the same or different and are each independently 1 to 9 and the CₐH₂ₐ₊₁ and C_{b}H_{2b+1} groups may be linear or branched and
y is 0.00001 to 0.091,
m is 1 to 4 and
n is 2 to 3,
M is Mg, Ca, Al, Sb, Sn, Ge, Ti, Zr, Zn, Ce, Bi, Sr, Mn, Li, Na and/or K and
M' is Fe.

5. Diorganylphosphinic salts according to one or more of Claims 1 to 4, **characterized in that** the iron is in the form of iron(II) dialkylphosphinates and/or iron(III) dialkylphosphinates.

6. Diorganylphosphinic salts according to one or more of Claims 1 to 4, **characterized in that** M and M' are in the form of a homogeneous ionic compound with the (CₐH₂ₐ₊₁)(C_{b}H_{2b+1})PO₂ anions.

7. Diorganylphosphinic salts according to one or more of Claims 1 to 6, **characterized in that** they further comprises telomer ions, where the telomer ions are those of the empirical formula (VI)
H-(C_{w}H_{2w})ₖP(O)(O⁽⁻⁾)(CₓH₂ₓ)₁-H (VI)
where, in formula (VI), independently of one another,
k is 1 to 9, l is 1 to 9, w is 2 to 9 and x is 2 to 9.

8. Diorganylphosphinic salts according to one or more of Claims 1 to 7, **characterized in that**, in formula (VI),
w and x are each 2 to 4 and k and 1 are each 1 to 4.

9. Diorganylphosphinic salts according to one or more of Claims 1 to 7, **characterized in that**, in formula (VI),
w and x are each 2 or 3 and k and 1 are each 1 to 3.

10. Diorganylphosphinic salts according to one or more of Claims 1 to 9, **characterized in that** they comprise
a) 60 to 99.8999 P% dialkylphosphinic salts of the formula (I) and
b) 0.1 to 40 P% of telomer ions of the formula (VI),
where the sum total of a) and b) is 100 P%, with the proviso that the diorganylphosphinic salts of the formula (I) and the telomer ions of the formula (VI) are each different compounds.

11. Diorganylphosphinic salts according to one or more of Claims 1 to 10, **characterized in that** the ions M, M', (CₐH₂ₐ₊₁)(C_{b}H_{2b+1})PO₂⁻, H-(C_{w}H_{2w})ₖPO₂⁻(CₓH₂ₓ)ₗ-H and anions of ethylbutylphosphinic acid, dibutylphosphinic acid, ethylhexylphosphinic acid, butylhexylphosphinic acid, ethyloctylphosphinic acid, sec-butylethylphosphinic acid, 1-ethylbutyl(butyl)phosphinic acid, ethyl(1-methylpentyl)phosphinic acid, di-sec-butylphosphinic acid (di(1-methylpropyl)phosphinic acid), propyl(hexyl)phosphinic acid, dihexylphosphinic acid, hexyl(nonyl)phosphinic acid, propyl(nonyl)phosphinic acid, dinonylphosphinic acid, dipropylphosphinic acid, butyl(octyl)phosphinic acid, hexyl(octyl)phosphinic acid, dioctylphosphinic acid, ethyl(cyclopentylethyl)phosphinic acid, butyl(cyclopentylethyl)phosphinic acid, ethyl(cyclohexylethyl)phosphinic acid, butyl(cyclohexylethyl)phosphinic acid, ethyl(phenylethyl)phosphinic acid, butyl(phenylethyl)phosphinic acid, ethyl(4-methylphenylethyl)phosphinic acid, butyl(4-methylphenylethyl)phosphinic acid, butylcyclopentylphosphinic acid, butylcyclohexylethylphosphinic acid, butylphenylphosphinic acid, ethyl(4-methylphenyl)phosphinic acid and/or butyl(4-methylphenyl)phosphinic acid together constitute a homogeneous ionic compound.

12. Diorganylphosphinic salts according to one or more of Claims 1 to 11, **characterized in that** the telomer ions are in the form of their metal salts, these being metal salts of ethylbutylphosphinic acid, dibutylphosphinic acid, ethylhexylphosphinic acid, butylhexylphosphinic acid, ethyloctylphosphinic acid, sec-butylethylphosphinic acid, 1-ethylbutyl(butyl)phosphinic acid, ethyl(1-methylpentyl)phosphinic acid, di-sec-butylphosphinic acid (di-1-methylpropylphosphinic acid), propyl(hexyl)phosphinic acid, dihexylphosphinic acid, hexyl(nonyl)phosphinic acid, propyl(nonyl)phosphinic acid, dinonylphosphinic acid, dipropylphosphinic acid, butyl(octyl)phosphinic acid, hexyl(octyl)phosphinic acid, dioctylphosphinic acid, ethyl(cyclopentylethyl)phosphinic acid, butyl(cyclopentylethyl)phosphinic acid, ethyl(cyclohexylethyl)phosphinic acid, butyl(cyclohexylethyl)phosphinic acid, ethyl(phenylethyl)phosphinic acid, butyl(phenylethyl)phosphinic acid, ethyl(4-methylphenylethyl)phosphinic acid, butyl(4-methylphenylethyl)phosphinic acid, butylcyclopentylphosphinic acid, butylcyclohexylethylphosphinic acid, butylphenylphosphinic acid, ethyl(4-methylphenyl)phosphinic acid and/or butyl(4-methylphenyl)phosphinic acid, and the metal of the metal salt comes from the group of Mg, Ca, Al, Sb, Sn, Ge, Ti, Fe, Zr, Zn, Ce, Bi, Sr, Mn, Li, Na and/or K.

13. Diorganylphosphinic salts according to one or more of Claims 1 to 12, **characterized in that** they have
a particle size of 0.1 to 1000 µm,
a bulk density of 80 to 800 g/l,
a tamped density of 100 g/l to 1100 g/l,
an angle of repose of 5 to 45 degrees,
a BET surface area of 1 to 40 m²/g,
L color values of 85 to 99.9,
a color values of -4 to +9 and
b color values of -2 to +6.

14. Dialkylphosphinic salts according to one or more of Claims 1 to 13, **characterized in that** they have
a particle size of 0.5 to 800 µm,
a bulk density of 80 to 600 g/l,
a tamped density of 600 g/l to 800 g/l and
an angle of repose of 10 to 40 degrees.

15. Process for producing diorganylphosphinic salts according to one or more of Claims 1 to 14, **characterized in that**
a) in a process stage 1, 0.9 to 1.1 molecules of olefin per P are added onto a watersoluble salt of the hypophosphorous acid or the acid itself,
b) in a process stage 2, 0.9 to 1.1 additional molecules of olefin per P are added onto the intermediate from a) to give dialkylphosphinic acid or salt thereof,
c) in a process stage 3, one to 9 further olefin molecules are added onto 0% to 20% of the dialkylphosphinate molecules from process stage 1, so as to form telomers,
d) in a process stage 4, a crystallization of the intermediate from b) or c) with a metal salt and an iron salt is conducted.

16. Process for producing diorganylphosphinic salts according to one or more of Claims 1 to 14, **characterized in that**
a) in a process stage 1, 0.9 to 1.1 molecules of olefin per P are added onto a watersoluble salt of the hypophosphorous acid or the acid itself,
b) in a process stage 2, 0.9 to 1.1 additional molecules of olefin per P are added onto the intermediate from a) to give dialkylphosphinic acid or salt thereof,
c) in a process stage 2, one to 9 further olefin molecules are added onto 0% to 20% of the dialkylphosphinate molecules from process stage 1, so as to form telomers,
d) in a process stage 3, a crystallization with a metal salt and/or an iron salt is conducted and
e) in a process stage 4, a coprecipitation of the intermediate from d) with a metal salt or an iron salt is conducted.

17. Process for producing diorganylphosphinic salts according to one or more of Claims 1 to 14, **characterized in that**
a) in a process stage 1, 0.9 to 1.1 molecules of olefin per P are added onto a watersoluble salt of the hypophosphorous acid or the acid itself,
b) in a process stage 2, 0.9 to 1.1 additional molecules of olefin per P are added onto the intermediate from a) to give dialkylphosphinic acid or salt thereof,
c) in a process stage 3, a crystallization with a metal salt and/or an iron salt is conducted and
d) then, in a process stage 4, the telomers are physically mixed.

18. Process according to one or more of Claims 15 to 17, **characterized in that** the iron salts are fluorides, chlorides, bromides, iodides, iodate, perchlorate, oxides, hydroxides, peroxides, superoxides, sulfates, hydrogensulfates, sulfate hydrates, sulfites, peroxosulfates, nitrides, phosphides, nitrates, nitrate hydrates, nitrites, phosphates, peroxophosphates, phosphites, hypophosphites, pyrophosphates, carbonates, hydrogencarbonates, hydroxide carbonates, carbonate hydrates, silicates, hexafluorosilicates, hexafluorosilicate hydrates, stannates, borates, polyborates, peroxoborates, thiocyanates, cyanates, cyanides, chromates, chromites, molybdates, permanganates, formates, acetates, acetate hydrates, trifluoroacetate hydrates, propionates, butyrates, valerates, caprylates, oleates, stearates, oxalates, tartrates, citrates, basic citrates, citrate hydrates, benzoates, salicylates, lactates, lactate hydrates, acrylates, maleates, salts of succinic acid, salts of glycine, phenoxides, para-phenolsulfonates, para-phenolsulfonate hydrates, acetylacetonate hydrates, tannates, dimethyldithiocarbamates, trifluoromethanesulfonate, alkylsulfonates and/or aralkylsulfonates.

19. Process according to one or more of Claims 15 to 18, **characterized in that** the metal of the metal salt comes from the group of Al, Ti, Fe and/or Zn.

20. Use of diorganylphosphinic salts according to one or more of Claims 1 to 14 as an intermediate for further syntheses, as a binder, as a crosslinker or accelerator in the curing of epoxy resins, polyurethanes and unsaturated polyester resins, as polymer stabilizers, as a crop protection composition, as a sequestrant, as a mineral oil additive, as an anticorrosive, in washing and cleaning composition applications, and in electronics applications.

21. Use of diorganylphosphinic salts according to one or more of Claims 1 to 14 as a flame retardant, especially as a flame retardant for clearcoats and intumescent coatings, as a flame retardant for wood and other cellulosic products, as a reactive and/or nonreactive flame retardant for polymers, for production of flame-retardant polymer molding compounds, for production of flame-retardant polymer moldings and/or for rendering polyester and pure and blended cellulose fabrics flame-retardant by impregnation.

22. Use according to Claim 21, **characterized in that** the diorganylphosphinic salts according to one or more of Claims 1 to 13 are used together with synergists, where the synergists are melamine phosphate, dimelamine phosphate, pentamelamine triphosphate, trimelamine diphosphate, tetrakismelamine triphosphate, hexakismelamine pentaphosphate, melamine diphosphate, melamine tetraphosphate, melamine pyrophosphate, melamine polyphosphates, melam polyphosphates, melem polyphosphates and/or melon polyphosphates; or melamine condensation products such as melam, melem and/or melon; or oligomeric esters of tris(hydroxyethyl) isocyanurate with aromatic polycarboxylic acids, benzoguanamine, tris(hydroxyethyl) isocyanurate, allantoin, glycouril, melamine, melamine cyanurate, urea cyanurate, dicyandiamide and/or guanidine; or nitrogen-containing phosphates of the formula (NH₄)_{y}H_{3-y}PO₄ or (NH₄PO₃)_{z} with y = 1 to 3 and z = 1 to 10 000; or aluminum phosphites, aluminum pyrophosphites, aluminum phosphonates, aluminum pyrophosphonates; or silicates, zeolites, silicas, ceramic powder, zinc compounds, e.g. zinc borate, zinc carbonate, zinc stannate, zinc hydroxystannate, zinc phosphate, zinc sulfide, zinc oxide, zinc hydroxide, zinc oxide hydrate, basic zinc silicate, zinc molybdate magnesium hydroxide, hydrotalcite, magnesium carbonate, calcium magnesium carbonate; or salts of ethylphosphonic acid, of propylphosphonic acid, of butylphosphonic acid, of n-butylphosphonic acid, of sec-butylphosphonic acid, of hexylphosphonic acid and/or of octylphosphonic acid.

23. Use according to Claim 21 or 22, **characterized in that** further additives are used, these being antioxidants, UV stabilizers, gamma ray stabilizers, hydrolysis stabilizers, antistats, emulsifiers, nucleating agents, plasticizers, processing auxiliaries, impact modifiers, dyes, pigments and others.

24. Use according to one or more of Claims 21 to 23, **characterized in that** 0.0001% to 99.7999% by weight of diorganylphosphinic salts according to one or more of Claims 1 to 13, 0.1% to 40% by weight of synergists and 0.1% to 40% by weight of additives are used, where the sum of the components is 100% by weight.

25. Flame-retardant thermoplastic or thermoset polymer molding compound or polymer moldings, films, filaments and/or fibers comprising 0.5% to 45% by weight of diorganylphosphinic salts according to one or more of Claims 1 to 14, 0.5% to 95% by weight of thermoplastic or thermoset polymer or mixtures thereof, 0% to 55% by weight of additives and 0% to 55% by weight of filler or reinforcing materials, where the sum of the components is 100% by weight, **characterized in that** the polymer comprises thermoplastic polymers of the HI (high-impact) polystyrene, polyphenylene ether, polyamide, polyester or polycarbonate type, and blends or polymer blends of the ABS (acrylonitrile-butadiene-styrene) or PC/ABS (polycarbonate/acrylonitrile-butadiene-styrene) or PPE/HIPS (polyphenylene ether/HI polystyrene) polymer type, and/or thermoset polymers of the unsaturated polyester or epoxy resin type.

## Revendications

1. Sels de l'acide diorganylphosphinique, contenant 0,0001 à 99,9999% en poids de fer.

2. Sels de l'acide diorganylphosphinique selon la revendication 1, **caractérisés en ce qu'**ils correspondent à la formule (I), 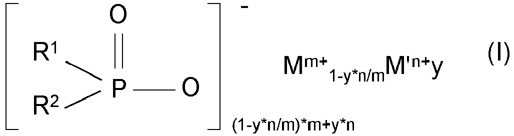 dans laquelle
R¹ et R² sont identiques ou différents et signifient C₁-C₁₈-alkyle linéaire, ramifié ou cyclique, C₆-C₁₈-aryle, C₇-C₁₈-arylalkyle et/ou C₇-C₁₈-alkylaryle ou forment au moins un cycle l'un avec l'autre,
y signifie 0,00001 à 0,091,
m signifie 1 à 4 et
n signifie 2 à 3,
M signifie Mg, Ca, Al, Sb, Sn, Ge, Ti, Zr, Zn, Ce, Bi, Sr, Mn, Li, Na et/ou K et
M' signifie Fe.

3. Sels de l'acide diorganylphosphinique selon la revendication 2, **caractérisés en ce que** dans la formule (I), R¹, R² sont identiques ou différents et signifient, indépendamment l'un de l'autre, méthyle, éthyle, n-propyle, iso-propyle, n-butyle, tert-butyle, n-pentyle, 2-pentyle, 3-pentyle, 2-méthylbutyle, 3-méthylbutyle (iso-pentyle), 3-méthylbut-2-yle, 2-méthylbut-2-yle, 2,2-diméthylpropyle (néopentyle), hexyle, heptyle, octyle, nonyle, décyle, cyclopentyle, cyclopentyléthyle, cyclohexyle, cyclohexyléthyle, phényle, phényléthyle, méthylphényle et/ou méthylphénéthyle.

4. Sels de l'acide diorganylphosphinique selon l'une quelconque des revendications 1 à 3, **caractérisés en ce qu'**ils correspondent à la formule (II), 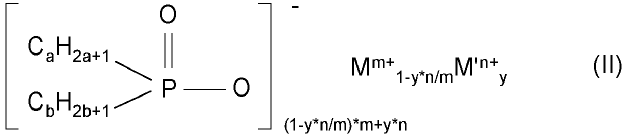 dans laquelle
a et b sont identiques ou différents et signifient à chaque fois, indépendamment l'un de l'autre, 1 à 9 et les groupes CₐH₂ₐ₊₁ et C_{b}H_{2b+1} peuvent être linéaires ou ramifiés et
y signifie 0,00001 à 0,091,
m signifie 1 à 4 et
n signifie 2 à 3,
M signifie Mg, Ca, Al, Sb, Sn, Ge, Ti, Zr, Zn, Ce, Bi, Sr, Mn, Li, Na et/ou K et
M' signifie Fe.

5. Sels de l'acide diorganylphosphinique selon l'une ou plusieurs des revendications 1 à 4, **caractérisés en ce que** le fer se trouve sous forme de dialkylphosphinates de fer (II) et/ou de dialkylphosphinates de fer (III).

6. Sels de l'acide diorganylphosphinique selon l'une ou plusieurs des revendications 1 à 4, **caractérisés en ce que** M et M' se trouvent sous forme d'un composé ionique uniforme avec les anions (CₐH₂ₐ₊₁)(C_{b}H_{2b+1})PO₂.

7. Sels de l'acide diorganylphosphinique selon l'une ou plusieurs des revendications 1 à 6, **caractérisés en ce qu'**ils contiennent en outre des ions télomères, les ions télomères étant ceux de formule brute (VI)
H-(C_{w}H_{2w})ₖP(O)(O⁽⁻⁾)(CₓH₂ₓ)₁-H (VI)
où, dans la formule (VI), indépendamment les uns des autres, k signifie 1 à 9, 1 signifie 1 à 9, w signifie 2 à 9 et x signifie 2 à 9.

8. Sels de l'acide diorganylphosphinique selon l'une ou plusieurs des revendications 1 à 7, **caractérisés en ce que** dans la formule (VI), w et x signifient à chaque fois 2 à 4 et k et 1 signifient à chaque fois 1 à 4.

9. Sels de l'acide diorganylphosphinique selon l'une ou plusieurs des revendications 1 à 7, **caractérisés en ce que** dans la formule (VI), w et x signifient à chaque fois 2 ou 3 et k et 1 signifient à chaque fois 1 à 3.

10. Sels de l'acide diorganylphosphinique selon l'une ou plusieurs des revendications 1 à 9, **caractérisés en ce qu'**ils contiennent
a) 60 à 99,8999% en P de sels de l'acide dialkylphosphinique de formule (I) et
b) 0,1 à 40% en P d'ions télomères de formule (VI),
la somme de a) et de b) valant 100% en P, sous réserve qu'il s'agit, pour les sels de l'acide diorganylphosphinique de formule (I) et pour les ions télomères de formule (VI), à chaque fois de composés différents.

11. Sels de l'acide diorganylphosphinique selon l'une ou plusieurs des revendications 1 à 10, **caractérisés en ce que** les ions M, M', (CₐH₂ₐ₊₁)(C_{b}H_{2b+1})PO₂⁻, H(C_{w}H_{2w})ₖPO₂⁻(CₓH₂ₓ)₁-H et les anions de l'acide éthylbutylphosphinique, dibutylphosphinique, éthylhexylphosphinique, butylhexylphosphinique, éthyloctylphosphinique, sec-butyléthylphosphinique, 1-éthylbutyl-butylphosphinique, éthyl-1-méthylpentylphosphinique, di-sec-butylphosphinique (di-1-méthylpropylphosphinique), propyl-hexylphosphinique, dihexylphosphinique, hexyl-nonylphosphinique, propyl-nonylphosphinique, dinonylphosphinique, dipropylphosphinique, butyl-octylphosphinique, hexyl-octylphosphinique, dioctylphosphinique, éthyl(cyclopentyléthyl)phosphinique, butyl(cyclopentyléthyl)phosphinique, éthyl(cyclohexyléthyl)phosphinique, butyl(cyclohexyléthyl)phosphinique, éthyl(phényléthyl)phosphinique, butyl(phényléthyl)phosphinique, éthyl(4-méthylphényléthyl)phosphinique, butyl(4-méthylphényléthyl)phosphinique, butylcyclopentylphosphinique, butylcyclohexyléthylphosphinique, butylphénylphosphinique, éthyl(4-méthylphényl)phosphinique et/ou butyl(4-méthylphényl)phosphinique représentent, l'un avec l'autre, un composé ionique uniforme.0}

12. Sels de l'acide diorganylphosphinique selon l'une ou plusieurs des revendications 1 à 11, **caractérisés en ce que** les ions télomères se trouvent sous forme de leurs sels métalliques, les sels métalliques étant des sels métalliques de l'acide éthylbutylphosphinique, dibutylphosphinique, éthylhexylphosphinique, butylhexylphosphinique, éthyloctylphosphinique, sec-butyléthylphosphinique, 1-éthylbutyl-butylphosphinique, éthyl-1-méthylpentylphosphinique, di-sec-butylphosphinique (di-1-méthylpropylphosphinique), propyl-hexylphosphinique, dihexylphosphinique, hexyl-nonylphosphinique, propyl-nonylphosphinique, dinonylphosphinique, dipropylphosphinique, butyl-octylphosphinique, hexyl-octylphosphinique, dioctylphosphinique, éthyl(cyclopentyléthyl)phosphinique, butyl(cyclopentyléthyl)phosphinique, éthyl(cyclohexyléthyl)phosphinique, butyl(cyclohexyléthyl)phosphinique, éthyl(phényléthyl)phosphinique, butyl(phényléthyl)phosphinique, éthyl(4-méthylphényléthyl)phosphinique, butyl(4-méthylphényléthyl)phosphinique, butylcyclopentylphosphinique, butylcyclohexyléthylphosphinique, butylphénylphosphinique, éthyl(4-méthylphényl)phosphinique et/ou butyl(4-méthylphényl)phosphinique et le métal du sel métallique étant issu du groupe Mg, Ca, Al, Sb, Sn, Ge, Ti, Fe, Zr, Zn, Ce, Bi, Sr, Mn, Li, Na et/ou K.

13. Sels de l'acide diorganylphosphinique selon l'une ou plusieurs des revendications 1 à 12, **caractérisés en ce qu'**ils présentent
- une grosseur de particule de 0,1 à 1000 µm,
- une densité apparente de 80 à 800 g/l,
- une densité tassée de 100 g/l à 1100 g/l,
- un angle de déversement de 5 à 45°,
- une surface BET de 1 à 40 m²/g,
- une valeur chromatique L de 85 à 99,9,
- une valeur chromatique a de -4 à +9 et
- une valeur chromatique b de -2 à +6.

14. Sels de l'acide dialkylphosphinique selon l'une ou plusieurs des revendications 1 à 13, **caractérisés en ce qu'**ils présentent
- une grosseur de particule de 0,5 à 800 µm,
- une densité apparente de 80 à 800 g/l,
- une densité tassée de 600 g/l à 800 g/l et
- un angle de déversement de 10 à 40°.

15. Procédé pour la préparation de sels de l'acide diorganylphosphinique selon l'une ou plusieurs des revendications 1 à 14, **caractérisé en ce que**
a) dans une étape de procédé 1, on ajoute 0,9 à 1,1 molécule d'oléfine par P sur un sel soluble dans l'eau de l'acide hypophosphoreux ou sur l'acide lui-même,
b) dans une étape de procédé 2, on ajoute 0,9 à 1,1 de molécule supplémentaire d'oléfine par P sur le produit intermédiaire de a) en acide dialkylphosphinique ou son sel
c) dans une étape de procédé 3, on ajoute 1 à 9 autres molécules d'oléfine sur 0 à 20% des molécules de phosphinate de dialkyle de l'étape de procédé 1, de telle sorte que des télomères se forment
d) dans une étape de procédé 4, on réalise une cristallisation du produit intermédiaire de b) ou de c) avec un sel métallique et un sel de fer.

16. Procédé pour la préparation de sels de l'acide diorganylphosphinique selon l'une ou plusieurs des revendications 1 à 14, **caractérisé en ce que**
a) dans une étape de procédé 1, on ajoute 0,9 à 1,1 molécule d'oléfine par P sur un sel soluble dans l'eau de l'acide hypophosphoreux ou sur l'acide lui-même,
b) dans une étape de procédé 2, on ajoute 0,9 à 1,1 de molécule supplémentaire d'oléfine par P sur le produit intermédiaire de a) en acide dialkylphosphinique ou son sel
c) dans une étape de procédé 2, on ajoute 1 à 9 autres molécules d'oléfine sur 0 à 20% des molécules de phosphinate de dialkyle de l'étape de procédé 1, de telle sorte que des télomères se forment
d) dans une étape de procédé 3, on réalise une cristallisation avec un sel métallique et/ou un sel de fer et
e) dans une étape de procédé 4, on réalise une coprécipitation du produit intermédiaire de d) avec un sel métallique ou un sel de fer.

17. Procédé pour la préparation de sels de l'acide diorganylphosphinique selon l'une ou plusieurs des revendications 1 à 14, **caractérisé en ce que**
a) dans une étape de procédé 1, on ajoute 0,9 à 1,1 molécule d'oléfine par P sur un sel soluble dans l'eau de l'acide hypophosphoreux ou sur l'acide lui-même,
b) dans une étape de procédé 2, on ajoute 0,9 à 1,1 de molécule supplémentaire d'oléfine par P sur le produit intermédiaire de a) en acide dialkylphosphinique ou son sel
c) dans une étape de procédé 3, on réalise une cristallisation avec un sel métallique et/ou un sel de fer et
d) on mélange ensuite, dans une étape de procédé 4, physiquement les télomères.

18. Procédé selon l'une ou plusieurs des revendications 15 à 17, **caractérisé en ce qu'**il s'agit, pour les sels de fer, de fluorures, de chlorures, de bromures, d'iodures, d'iodate, de perchlorate, d'oxydes, d'hydroxydes, de peroxydes, de superoxydes, de sulfates, d'hydrogénosulfates, de sulfates hydratés, de sulfites, de peroxosulfates, de nitrures, de phosphures, de nitrates, de nitrates hydratés, de nitrites, de phosphates, de peroxophosphates, de phosphites, d'hypophosphites, de pyrophosphates, de carbonates, d'hydrogénocarbonates, d'hydroxyde-carbonates, de carbonates hydratés, de silicates, d'hexafluorosilicates, d'hexafluorosilicates hydratés, de stannates, de borates, de polyborates, de peroxoborates, de thiocyanates, de cyanates, de cyanures, de chromates, de chromites, de molybdates, de permanganates, de formiates, d'acétates, d'acétates hydratés, de trifluoroacétates hydratés, de propionates, de butyrates, de valérates, de caprylates, d'oléates, de stéarates, d'oxalates, de tartrates, de citrates, de citrates basiques, de citrates hydratés, de benzoates, de salicylates, de lactates, de lactates hydratés, d'acrylates, de maléates, de sels de l'acide succinique, de sels de la glycine, de phénolates, de para-phénolsulfonates, de para-phénolsulfonates hydratés, d'acétylacétonates hydratés, de tannates, de diméthyldithiocarbamates, de trifluorométhanesulfonate, d'alkylsulfonates et/ou d'aralkylsulfonates.

19. Procédé selon l'une ou plusieurs des revendications 15 à 18, **caractérisé en ce que** le métal du sel métallique est issu du groupe Al, Ti, Fe et/ou Zn.

20. Utilisation de sels de l'acide diorganylphosphinique selon l'une ou plusieurs des revendications 1 à 14 comme produit intermédiaire pour d'autres synthèses, comme liant, comme réticulant ou, selon le cas, accélérateur lors du durcissement de résines époxy, de polyuréthanes et de résines de polyester insaturées, comme stabilisants de polymères, comme agents de phytoprotection, comme agents de séquestration, comme additif d'huile minérale, comme agent de protection contre la corrosion, dans des applications d'agents de lavage et de nettoyage et dans des applications électroniques.

21. Utilisation de sels de l'acide diorganylphosphinique selon l'une ou plusieurs des revendications 1 à 14 comme agent ignifuge, en particulier comme agent ignifuge pour des laques claires et des revêtements intumescents, comme agent ignifuge pour le bois et d'autres produits contenant de la cellulose, comme agent ignifuge réactif et/ou non réactif pour des polymères, pour la préparation de masses de moulage polymères ignifugées, pour la préparation de corps façonnés polymères ignifugés et/ou pour l'apprêt inhibant les flammes de polyesters et de tissus en cellulose pure et de tissus mixtes à base de cellulose par imprégnation.

22. Utilisation selon la revendication 21, **caractérisée en ce que** les sels de l'acide diorganylphosphinique selon l'une ou plusieurs des revendications 1 à 13 sont utilisés conjointement avec des synergistes, où il s'agit, pour les synergistes, de phosphate de mélamine, de phosphate de dimélamine, de triphosphate de pentamélamine, de diphosphate de trimélamine, de triphosphate de tétrakismélamine, de pentaphosphate d'hexakismélamine, de diphosphate de mélamine, de tétraphosphate de mélamine, de pyrophosphate de mélamine, de polyphosphate de mélamine, de polyphosphate de mélam, de polyphosphate de mélem et/ou de polyphosphate de mélon ; de produits de condensation de mélamine, tels que le mélam, le mélem et/ou le mélon ; d'esters oligomères d'isocyanurate de tris(hydroxyéthyle) avec des acides polycarboxyliques aromatiques, la benzoguanamine, l'isocyanurate de tris(hydroxyéthyle), l'allantoïne, le glyco-urile, la mélamine, le cyanurate de mélamine, le cyanurate d'urée, le dicyanodiamide et/ou la guanidine ; de phosphates contenant de l'azote des formules (NH₄)_{y}H_{3-y}PO₄ ou (NH₄PO₃)_{z}, y valant 1 à 3 et z valant 1 à 10.000 ; de phosphites d'aluminium, de pyrophosphites d'aluminium, de phosphonates d'aluminium, de pyrophosphonates d'aluminium ; de silicates, de zéolithes, de silices, de poudres céramiques, de composés à base de zinc, par exemple le borate de zinc, le carbonate de zinc, le stannate de zinc, l'hydroxystannate de zinc, le phosphate de zinc, le sulfure de zinc, l'oxyde de zinc, hydroxyde de zinc, l'oxyde de zinc dihydraté, le silicate de zinc basique, de molybdate de zinc, d'hydroxyde de magnésium, d'hydrotalcite, de carbonate de magnésium, de carbonate de calcium-magnésium ; de sels de l'acide éthylphosphonique, de l'acide propylphosphonique, de l'acide butylphosphonique, de l'acide n-butylphosphonique, de l'acide sec-butylphosphonique, de l'acide hexylphosphonique et/ou de l'acide octylphosphonique.

23. Utilisation selon la revendication 21 ou 22, **caractérisée en ce que** d'autres additifs, pour lesquels il s'agit d'antioxydants, de stabilisants aux UV, de stabilisants aux rayons gamma, de stabilisants à l'hydrolyse, d'agents antistatiques, d'émulsifiants, d'agents de nucléation, de plastifiants, d'adjuvants de mise en œuvre, de modificateurs choc, de colorants, de pigments et autres, sont utilisés.

24. Utilisation selon l'une ou plusieurs des revendications 21 à 23, **caractérisée en ce que** 0,0001 à 99,7999% en poids de sels de l'acide diorganylphosphinique selon l'une ou plusieurs des revendications 1 à 13, 0,1 à 40% en poids de synergistes et 0,1 à 40% en poids d'additifs sont utilisés, la somme des composants valant 100% en poids.

25. Masse de moulage polymère, corps façonnés, films, fils et/ou fibres polymères thermoplastiques ou thermodurcissables, ignifugés, contenant 0,5 à 45% en poids de sels de l'acide diorganylphosphinique selon l'une ou plusieurs des revendications 1 à 14, 0,5 à 95% en poids de polymère thermoplastique ou thermodurcissable ou de mélanges de ceux-ci, 0 à 55% en poids d'additifs et 0 à 55% en poids de charge ou de matériaux de renforcement, la somme des composants valant 100% en poids, **caractérisés en ce qu'**il s'agit, pour le polymère, de polymères thermoplastiques du type polystyrène-HI (High-Impact), polyphénylénéthers, polyamides, polyesters, polycarbonates et de mélanges ; ou de mélanges polymères de type ABS (acrylonitrile-butadiène-styrène) ou PC/ABS (polycarbonate/acrylonitrile-butadiène-styrène) ou PPE/HIPS (polyphénylène-éther/polystyrène-HI), de matériaux synthétiques et/ou de polymères thermodurcissables du type polyesters insaturés ou résines époxydes.
